(19) Europäisches Patentamt
European Patent Office
Office européen des brevets

(11) EP 4 502 676 A1

(12) **EUROPEAN PATENT APPLICATION**
published in accordance with Art. 153(4) EPC

(43) Date of publication:
**05.02.2025 Bulletin 2025/06**

(21) Application number: **23779804.6**

(22) Date of filing: **20.03.2023**

(51) International Patent Classification (IPC):
***G02B 5/30*** *(2006.01)* ***B32B 7/023*** *(2019.01)*
***B42D 25/22*** *(2014.01)* ***B42D 25/364*** *(2014.01)*

(52) Cooperative Patent Classification (CPC):
**B32B 7/023; B42D 25/22; B42D 25/364; G02B 5/30**

(86) International application number:
**PCT/JP2023/010786**

(87) International publication number:
**WO 2023/189788 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057487**

(71) Applicant: **Zeon Corporation**
**Tokyo 100-8246 (JP)**

(72) Inventor: **IKEDA, Akira**
**Tokyo 100-8246 (JP)**

(74) Representative: **Maiwald GmbH**
**Elisenhof**
**Elisenstraße 3**
**80335 München (DE)**

(54) **IDENTIFICATION MEDIUM AND ARTICLE**

(57) An identification medium including a light reflective layer (I) and a light reflective layer (II) as light reflective layers, wherein: the light reflective layers are layers that reflect incident light as circularly polarized light; the light reflective layer (I) and the light reflective layer (II) are disposed side by side on a same plane; the light reflective layer (I) and the light reflective layer (II) are layers that exhibit colors of a same type; the light reflective layer (I) contains a flake (I-1) and a flake (I-2) and the light reflective layer (II) contains a flake (II-1) and a flake (II-2); and selective reflection center wavelengths and reflected light rotation directions thereof are in specific relationships. An article including the identification medium.

FIG.1

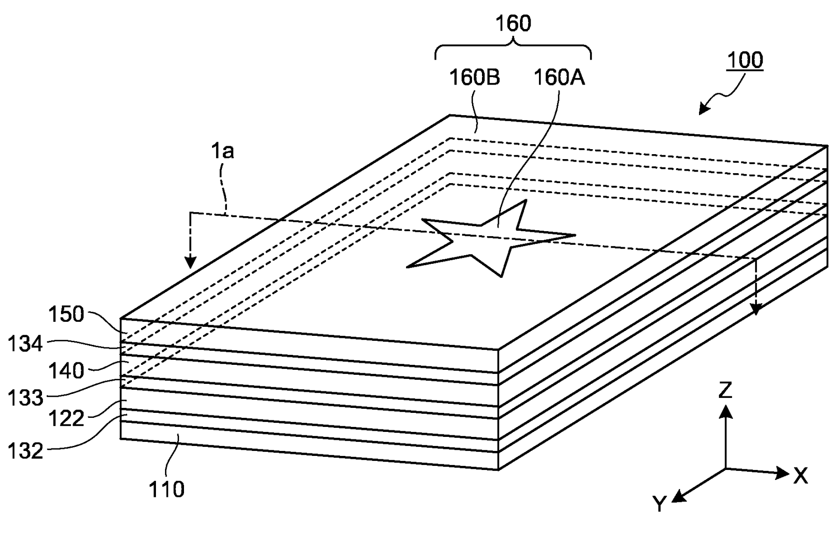


EP 4 502 676 A1

## Description

### Field

The present invention relates to an identification medium for identifying the authenticity of an article, and an article including the identification medium.

### Background

It is a general practice to equip an article with an identification medium for facilitating determination whether the article is authentic or not. The identification medium is required to have an anti-counterfeiting property and an identification function. The anti-counterfeiting property of the identification medium described herein refers to a property of the identification medium that cannot be easily replicated using an ordinary technique such as printing using an ordinary material. The identification function of the identification medium is a function that the authentic identification medium is capable of being distinguished, with high reliability by some means, from a counterfeit identification medium that has been forged using an ordinary technique.

Some known identification media use a material having cholesteric regularity as a light reflective layer (for example, Patent literatures 1 and 2). When light is incident on the material having cholesteric regularity, only a component in one rotation direction of circularly polarized light components can be reflected. Such a property cannot be obtained from a product that can be replicated using a technique such as printing using an ordinary material. Thus, such a property can be utilized for obtaining an identification medium with a high anti-counterfeiting property and identification function.

There are various types of materials having cholesteric regularity, and their optical properties can be represented using a selective reflection center wavelength $\lambda c$, a half-width $\Delta\lambda$ of the reflection band, and their ratio $\Delta\lambda/\lambda c$ as indicators. A material with a relatively large $\Delta\lambda/\lambda c$ value can be considered as a relatively broadband material, while a material with a small value can be considered as a relatively narrow band material.

As a main material having cholesteric regularity, a cholesteric resin layer may be mentioned. The cholesteric resin layer described herein is a layer composed of a material having a structure obtained by polymerizing and curing a polymerizable liquid crystal material capable of exhibiting a cholesteric liquid crystal phase while keeping its state of exhibiting the cholesteric liquid crystal phase.

In many cases, an article whose authenticity needs to be determined is of high value in itself, and is therefore required to be aesthetically pleasing. Thus, the identification medium provided to such an article is also required to be aesthetically pleasing. Specifically, the identification medium is required to have an aesthetically pleasing appearance during observation in which the identification function is exerted (observation via a device such as a viewer, observation under polarized light irradiation, etc.), during other normal observation (observation with the naked eye under natural light without using a device such as a viewer, etc.), or during both of them. In the identification medium described in Patent literature 1, a cholesteric resin layer that has been subjected to a so-called broadband treatment is used as part of its components. A cholesteric resin layer that has been subjected to the broadband treatment can have a so wide reflection band that it covers the entire visible light region. In this case, such a layer can have a mirror-like silver appearance, and as a result, the layer can exhibit a high design quality.

### Citation List

### Patent Literature

Patent Literature 1: International Publication No. 2021/153761 (corresponding publication: European patent application publication No. 4099067)
Patent Literature 2: Japanese Patent Application Laid-Open No. 2005-055556 A

### Summary

### Technical Problem

In the light of the circumstances described above, there is a demand for an identification medium for identifying authenticity that is more aesthetically pleasing than those previously known. Furthermore, there is a demand for an identification medium having, in addition to the silver appearance, a variety of appearances and variations in the manner the appearances change in the observation for expressing the identification function.

In addition, although the broadband treatment of the cholesteric resin layer for providing the silver appearance described above is a known technology, it is required for effecting the treatment to go through steps, such as irradiation with weak ultraviolet rays and heating, precisely in a plurality of stages. As a result, the material obtained by the production method including the broadband treatment becomes a costly material. Thus, there is a demand for an identification medium that can provide an aesthetically pleasing appearance, such as a silver appearance, and can be produced without performing such a broadband treatment.

Thus, an object of the present invention is to provide an identification medium and an article with a superior identification function, which can be easily produced, have wide variations in design expression in the observation for expressing the identification function, and can exhibit a high design quality.

Solution to Problem

In order to solve the above-mentioned problems, the present inventor has performed studies for obtaining a light reflective layer by using a cholesteric resin layer, which can be obtained without performing a broadband treatment, as a main component, to realize a silver appearance similar to that of the cholesteric resin layer that has been subjected to the broadband treatment. As a result, the present inventor has found that the above-mentioned problems can be solved by combining flakes of materials with cholesteric regularity having specific optical properties in a specific manner in order to form such a light reflective layer, thereby completing the present invention.

That is, the present invention includes the following.

(1) An identification medium comprising a light reflective layer (I) and a light reflective layer (II) as light reflective layers, wherein:

the light reflective layers are layers that reflect incident light as circularly polarized light;
the light reflective layer (I) and the light reflective layer (II) are disposed side by side on a same plane;
the light reflective layer (I) and the light reflective layer (II) are in contact with each other or are adjacent to each other with a separation distance of 200 $\mu$m or less;
the light reflective layer (I) and the light reflective layer (II) are layers that exhibit colors of a same type;
the light reflective layer (I) contains a flake (I-1) and a flake (I-2) as multiple types of flakes of a material having cholesteric regularity;
the flake (I-1) and the flake (I-2) are different from each other in color;
the flake (I-1) has a selective reflection center wavelength $\lambda c(I\text{-}1)$;
the flake (I-2) has a selective reflection center wavelength $\lambda c(I\text{-}2)$;
the light reflective layer (II) contains a flake (II-1) and a flake (II-2) as multiple types of flakes of a material having cholesteric regularity;
the flake (II-1) and the flake (II-2) are different from each other in color;
the flake (II-1) has a selective reflection center wavelength $\lambda c(II\text{-}1)$;
the flake (II-2) has a selective reflection center wavelength $\lambda c(II\text{-}2)$;
the $\lambda c(I\text{-}1)$, the $\lambda c(I\text{-}2)$, the $\lambda c(II\text{-}1)$, and the $\lambda c(II\text{-}2)$ satisfy the following requirement (a-1) or satisfy the following requirement (a-2),

$$\lambda c(I\text{-}1) < \lambda c(I\text{-}2) \text{ and } \lambda c(II\text{-}1) < \lambda c(II\text{-}2)$$

Requirement (a-1),

$$\lambda c(I\text{-}1) > \lambda c(I\text{-}2) \text{ and } \lambda c(II\text{-}1) > \lambda c(II\text{-}2)$$

Requirement (a-2);

a rotation direction of reflected light from the flake (I-1) and a rotation direction of reflected light from the flake (I-2) are different from each other; and
a rotation direction of reflected light from the flake (I-1) and a rotation direction of reflected light from the flake (II-1) are different from each other.

(2) The identification medium according to (1), wherein:

the light reflective layer (I) further contains a flake (I-3) as the multiple types of flakes;

the light reflective layer (II) further contains a flake (II-3) as the multiple types of flakes;
the flake (I-1), the flake (I-2), and the flake (I-3) are different from one another in color; and
the flake (II-1), the flake (II-2), and the flake (II-3) are different from one another in color.

(3) The identification medium according to (1) or (2), wherein:

both the light reflective layers (I) and (II) satisfy the following formulae (b-1) and (b-2),

$$0.90 \leq B(430\text{-}490)Ave\ /\ G(500\text{-}600)Ave \leq 1.05 \quad \text{formula (b-1)},$$

$$0.90 \leq R(600\text{-}660)Ave\ /\ G(500\text{-}600)Ave \leq 1.05 \quad \text{formula (b-2)},$$

in the formulae, B(430-490)Ave is an average value of an integrated reflectance of the light reflective layer (I) or (II) in wavelengths of 430 nm to 490 nm,
G(500-600)Ave is an average value of an integrated reflectance of the light reflective layer (I) or (II) in wavelengths of 500 nm to 600 nm, and
R(600-660)Ave is an average value of an integrated reflectance of the light reflective layer (I) or (II) in wavelengths of 600 nm to 660 nm.

(4) The identification medium according to any one of (1) to (3), wherein the light reflective layers (I) and (II) exhibit a color tone from pale color to silver.
(5) The identification medium according to any one of (1) to (4), wherein:

any of the multiple types of flakes satisfies the formula (c),

$$0.10 \leq \Delta\lambda/\lambda c \leq 0.25 \quad \text{formula (c)}$$

in the formula, $\Delta\lambda$ is a half-width of a reflection band of the flake, and $\lambda c$ is a selective reflection center wavelength of the flake.

(6) The identification medium according to (5), wherein all the multiple types of flakes satisfy the formula (c).
(7) The identification medium according to any one of (1) to (6), comprising a phase difference layer provided in a manner of overlapping with both the light reflective layer (I) and the light reflective layer (II).
(8) The identification medium according to (7), wherein the phase difference layer is a $\lambda/4$ wave plate.
(9) The identification medium according to (7) or (8), wherein the phase difference layer is provided at a position closer to a viewing side than the light reflective layer.
(10) The identification medium according to any one of (1) to (9), wherein all thicknesses of the multiple types of flakes are 3 $\mu$m or more and 7 $\mu$m or less.
(11) The identification medium according to any one of (1) to (10), wherein an average particle diameter of each of the multiple types of flakes is 100 $\mu$m or less.
(12) The identification medium according to any one of (1) to (11), wherein the light reflective layer (I), the light reflective layer (II), or both further contain a flake having a reflection band including a region exceeding a wavelength of 660 nm as the multiple types of flakes.
(13) The identification medium according to any one of (1) to (12), wherein an average value of an integrated reflectance of each of the light reflective layers (I) and (II) at 430 to 660 nm is 20% or higher.
(14) The identification medium according to any one of (1) to (13), further comprising a light absorption layer that is provided at a position on an opposite side to a viewing side of the light reflective layer.
(15) The identification medium according to any one of (1) to (14), comprising a covering layer that is provided at a position closer to a viewing side than the phase difference layer.
(16) The identification medium according to any one of (1) to (15), further comprising an attachment member for attaching the identification medium to an article.
(17) An article comprising the identification medium according to any one of (1) to (16).

## Advantageous Effects of Invention

According to the present invention, it is possible to provide an identification medium and article with the superior identification function, which can be easily produced, which have wide variations in design expression in the observation for expressing the identification function, and which can exhibit a high design quality.

## Brief Description of Drawings

FIG. 1 is a perspective view schematically showing an example of an identification medium of the present invention.
FIG. 2 is a vertical cross-sectional view showing a state in which the identification medium shown in FIG. 1 is cut along a line 1a.

## Description of Embodiments

Hereinafter, the present invention will be described in detail with reference to embodiments and examples. However, the present invention is not limited to the examples and embodiments described hereinafter, and may be freely modified for implementation without departing from the scope of claims of the present invention and the scope of their equivalents.
In the following description, the term "(meth)acrylic group" is a term that encompasses an "acrylic group", a "methacrylic group", and a combination of these. Similarly, the term "(thio)epoxy group" is a term that encompasses an "epoxy group", a "thioepoxy group", and a combination of these.
In the following description, an in-plane retardation Re of a layer is a value represented by $Re = (nx - ny) \times d$ unless otherwise specified. Herein, nx represents a refractive index in a direction in which the maximum refractive index is given among directions perpendicular to the thickness direction of the layer (in-plane directions), ny represents a refractive index in a direction, among the above-mentioned in-plane directions of the layer, perpendicular to the direction giving nx, and d represents the thickness of the layer. The measurement wavelength of retardation is 590 nm unless otherwise specified. In-plane retardations Re may be measured with a phase difference meter ("AxoScan" manufactured by Axometrics, Inc).
In the following description, a direction of a slow axis of a layer represents a direction of a slow axis in the in-plane direction, unless otherwise specified.
In the following description, a direction of a member being "parallel" and "perpendicular" may allow an error within the range of not impairing the advantageous effects of the present invention, for example, within a range of $\pm 4°$, preferably $\pm 3°$, or more preferably $\pm 1°$, unless otherwise specified.
In the following description, for convenience of description, "clockwise circularly polarized light" and "counterclockwise circularly polarized light" are defined based on the rotation direction of circularly polarized light when a light output destination is observed from a light output source. That is, when the light output destination is observed from the light output source, the polarized light of which the polarization direction rotates clockwise as the light travels is defined as the clockwise circularly polarized light, and the polarized light of which the polarization direction rotates in the opposite direction is defined as the counterclockwise circularly polarized light.
In the following description, unless otherwise specified, explanation is made with the identification medium being placed horizontally with a display surface facing upward. Thus, a side on which the identification medium is visually recognized may be simply referred to as an "upper" side, and the opposite side may be referred to as a "lower" side. For example, of one surface and the other surface of a given layer, the surface closer to the display surface of the identification medium may be referred to as an "upper side" surface. Furthermore, a direction perpendicular to such "upper" and "lower" directions may be referred to as a "horizontal" direction.
Observation of the identification medium includes observation for expressing an identification function under a specific condition (observation via a device such as a viewer, observation under polarized light irradiation, etc.) and, apart from this, normal observation (observation under natural light irradiation with the naked eye without using a device such as a viewer, etc.). In the following description, observation other than observation for which the purpose is explicitly described as expressing the identification function and other than observation for which there is a contextually obvious purpose to express the identification function as well is considered normal observation unless otherwise specified.

### [Summary of identification medium]

The identification medium of the present invention includes a specific light reflective layer (I) and a specific light reflective layer (II) as light reflective layers. The identification medium of the present invention may further include a phase

different layer as an optional component.

FIG. 1 is a perspective view schematically showing an example of the identification medium of the present invention. FIG. 2 is a vertical cross-sectional view showing a state in which the identification medium shown in FIG. 1 is cut along a line 1a. As shown in FIG. 1 and FIG.2, an identification medium 100 has a structure that includes a light absorption layer 110, a light reflective layer (I) 121 and a light reflective layer (II) 122, a phase difference layer 140, and a covering layer 150 in this order, and further includes adhesive layers 131 and 134 between the layers.

The light reflective layer (I) 121 and the light reflective layer (II) 122 are disposed via a thin adhesive layer on the plane defined by the upper surface of the light absorption layer 110, and are therefore arranged side by side on the same plane. With this arrangement, the light reflective layer (I) 121 and the light reflective layer (II) 122 each occupy only a portion of the plane corresponding to a display surface 160 in a mutually complemental manner. Therefore, the display surface 160 includes a region 160A occupied by the light reflective layer (I) 121, and a region 160B occupied by the light reflective layer (II) 122.

In this example, the region 160A of the light reflective layer (I) is surrounded by the region 160B of the light reflective layer (II), although the present invention is not limited thereto. The region of the light reflective layer (II) may be surrounded by the region of the light reflective layer (I), or may have a more complex shape different from that illustrated herein.

When a phase difference layer is provided, the phase difference layer is usually provided at a position closer to a viewing side than the light reflective layer. Therefore, in this case, the display surface of the identification medium is usually the surface of the identification medium on the phase difference layer side.

[Phase difference Layer]

Explanation will be made hereinbelow regarding an embodiment where the identification medium of the present invention has a phase difference layer. The phase difference layer may be provided in a manner of overlapping with both the light reflective layer (I) and the light reflective layer (II). That is, the phase difference layer may be provided in such a manner that, when the identification medium is observed from a direction perpendicular to its display surface (Z direction in FIGs. 1 and 2), a portion of the region where the phase difference of the phase difference layer is exhibited is at a position overlapping the light reflective layer (I), and another portion thereof is at a position overlapping the light reflective layer (II). In the example of FIGs. 1 and 2, the phase difference layer 140 extends over only the entire region of the plane corresponding to the display surface 160, and therefore it overlaps the entire surface of the light reflective layer (I) 121 and the entire surface of the light reflective layer (II) 122. However, the present invention is not limited to this, and the phase difference layer may be disposed not over the entire region but over only a partial region of the display surface. In this case, the phase difference layer may overlap only a portion of the surface of the light reflective layer (I), and may overlap only a portion of the surface of the light reflective layer (II).

Examples of the region having a phase difference may include a region that functions as a $\lambda/4$ wave plate and a region that functions as a $\lambda/2$ wave plate. When the identification medium of the present invention has a phase difference layer, it is particularly preferable that the phase difference layer has a region that functions as a $\lambda/4$ wave plate. The identification medium of the present invention utilizes the color tone change caused by a combination of circularly polarized light with different rotation directions. Therefore, by combining this with a $\lambda/4$ wave plate, these circularly polarized light can be converted into linearly polarized light with different polarization directions, and the identification function by the linear polarizer can be easily realized.

The region that functions as a $\lambda/4$ wave plate is a region where the in-plane retardation Re of the region is $\lambda/4$ or a value close to $\lambda/4$ at at least one wavelength $\lambda$ within a wavelength band in which the light reflective layer functions. For example, a region where Re is $((\lambda/4) \times 0.6)$ nm to $((\lambda/4) \times 1.4)$ nm, preferably $((\lambda/4) \times 0.8)$ nm to $((\lambda/4) \times 1.2)$ nm, may be used as the region having a phase difference. Similarly, the region that functions as a $\lambda/2$ wave plate is a region where the in-plane retardation Re of the region is $\lambda/2$ or a value close to $\lambda/2$, for example, a region where Re is $((\lambda/2) \times 0.6)$ nm to $((\lambda/2) \times 1.4)$ nm, preferably $((\lambda/2) \times 0.8)$ nm to $((\lambda/2) \times 1.2)$ nm. The wavelength $\lambda$ may be set to 590 nm, which is a wavelength near the center of visible light.

Examples of the phase difference layers and materials that constitute them will be more specifically described separately below.

[Light reflective layer]

The light reflective layers in the present invention are layers that reflect incident light as circularly polarized light. Specifically, the light reflective layers are layers that, when non-polarized light including various polarized light components is incident on the layer, reflect a certain polarized light component in the polarized light components as circularly polarized light. The light reflective layer may be a clockwise reflection circular polarizer (i.e., a reflection circular polarizer that selectively reflects the clockwise circularly polarized light component of the incident light) or a counterclockwise

reflection circular polarizer (i.e., a reflection circular polarizer that selectively reflects the counterclockwise circularly polarized light component of the incident light). However, such selective reflection occurs only in the reflection band in the entire wavelength band, and the proportion of reflection depends on the reflectance at the respective wavelengths of incident light. Most of the non-reflected light components of the incident light are transmitted through the light reflective layer, and some are absorbed by the light reflective layer.

With regard to the identification medium of the present invention, the light reflective layer (I) and the light reflective layer (II) are disposed side by side on the same plane, and are in contact with each other or are adjacent to each other with a separation distance of 200 μm or less. Furthermore, the light reflective layer (I) and the light reflective layer (II) are layers that exhibit colors of the same type. When these requirements are satisfied, the light reflective layers (I) and (II) can be made to have a matched appearance in normal observation of the identification medium (such as observation with the naked eye under natural light irradiation without using a device such as a viewer), and furthermore, the boundary between them can be made invisible. This makes it possible to configure a latent image that is visible only when observation for expressing the identification function is performed (such as observation via a device such as a viewer, observation under polarized light irradiation, etc.).

The "colors of the same type" that the light reflective layer (I) and the light reflective layer (II) exhibit encompasses cases where they are exactly the same color, and cases where the colors are similar enough to be difficult for a viewer to distinguish from one another when viewed by the human eye. For example, in the 24-color hue circle of the PCCS (Practical Color Co-ordinate System by Japan Color Research Institute), when focusing on a specific hue, colors that includes adjacent hues may be considered to be of the same type.

The specific method used to adjust the color tone of the light reflective layer (I) and the light reflective layer (II) in order to make them the layers exhibiting colors of the same type is not particularly limited. For example, it is possible to obtain the light reflective layer (I) and the light reflective layer (II) exhibiting colors of the same type by combining materials having the same selective reflection center wavelength $\lambda c$ and half-width $\Delta\lambda$ for respective flakes constituting these layers, and further adjusting the mixing proportions of these materials appropriately. More specifically, when the flakes constituting the light reflective layer (I) consist only of flakes (I-1) and (I-2) and the flakes constituting the light reflective layer (II) consist only of flakes (II-1) and (II-2), if the selective reflection center wavelength $\lambda c$ and the half width $\Delta\lambda$ of the flakes (I-1) and (II-1) are close to each other (however, the rotation direction of the reflected light is opposite), and the selective reflection center wavelength $\lambda c$ and the half width $\Delta\lambda$ of the flakes (I-2) and (II-2) are close to each other, it is possible to easily obtain the light reflective layer (I) and the light reflective layer (II) exhibiting colors of the same type by appropriately adjusting the proportions of these.

The light reflective layer (I) contains flakes (I-1) and (I-2) as multiple types of flakes of materials having cholesteric regularity, and the light reflective layer (II) contains flakes (II-1) and (II-2) as multiple types of flakes of materials having cholesteric regularity. The flakes contained in the light reflective layers are not limited these, and flakes having cholesteric regularity other than the aforementioned flakes may be contained therein in addition thereto. A flake is a material having a particulate structure obtained by crushing a layer structure. The flake of a material having cholesteric regularity may be obtained by crushing a layer structure formed of a material having cholesteric regularity. A cholesteric resin layer may be used as such a layer structure. As such flakes, those that have been classified as having the appropriate particle diameter may preferably be selected for use as particles having a flat structure. When the particles having such a flat structure are used as a component of a layer structure, the surface that was the main surface before crushing can be easily oriented in the same orientation as that before crushing. Thus, individual flakes can exhibit optical properties, which are the same as those of the cholesteric resin layer before crushing, in the layer structure including the flakes. Specific examples of the cholesteric resin layer will be described separately below.

The average particle diameter of each of the flakes is preferably 100 μm or less, and more preferably 75 μm or less. When the flakes have such a small particle diameter, the optical properties of multiple types of flakes contained in one light reflective layer cooperate to create an appearance having a silver pearl tone or the like, rather than each flake being visually recognized on the display surface as a member with a different color. This effect makes it possible to obtain a high design quality, which is one of the advantageous effects of the present invention. The silver pearl-tone appearance described herein is an appearance created by uniformly distributed fine particles having color tones other than silver, such as red, green, and blue. Unlike a uniform, achromatic silver appearance, the silver pearl-tone appearance evokes a design quality reminiscent of pearlescent luster.

On the other hand, the lower limit of the average particle diameter is preferably 10 μm or more, and more preferably 25 μm or more. When the flake has an average particle diameter equal to or greater than the above-mentioned lower limit, the aspect ratio of the flake can be made at a high value, and as a result, the optical properties of the cholesteric resin layer before crushing can be favorably exhibited also in the flake. Furthermore, the silver pearl-tone appearance, which is different from a uniform, achromatic silver color, can be favorably exhibited.

Such a desired average particle diameter may be obtained by crushing the cholesteric resin layer and then classifying the crushed material using an appropriate method.

The average particle diameter of the flake may be obtained by measuring the particle size distribution of the flake

using a laser scattering method and determining the average particle diameter from the particle size distribution. As a measuring instrument for the laser scattering method, a laser diffraction/scattering particle size distribution measuring device (for example, LA-960 manufactured by Horiba, Ltd.) may be used. In the present application, average values such as the average particle diameter of a flake or the like may be the volume average unless otherwise specified.

The thickness of the flake is preferably 3 μm or more, and preferably 7 μm or less. When the thickness is equal to or greater than the above-mentioned lower limit, desired optical effects such as a high reflectance can be favorably exhibited. On the other hand, when the thickness is equal to or less than the above-mentioned upper limit, occurrence of orientation defects or the like can be effectively prevented. Furthermore, a flake with the desired high aspect ratio can be easily obtained. The thickness of the flake usually depends on the thickness of the cholesteric resin layer before crushing. If the thickness of the cholesteric resin layer before crushing is uniform, the thickness of the resulting flake can also be of the same uniform value. However, if there is variation in the thickness, the volume average value may be adopted as the thickness of the flake.

Regarding the aspect ratio of the flake, a value of a ratio obtained by dividing the average particle diameter of the flake by the thickness of the flake may be used as an index thereof. The value of this ratio is preferably 3 or more, more preferably 5 or more, and particularly preferably 10 or more, and is preferably 40 or less, more preferably 30 or less, and particularly preferably 20 or less.

Each of the flakes which are contained in the light reflective layers and have cholesteric regularity has a specific reflection band. Thus, each of the flakes can have a specific half-width $\Delta\lambda$ of the reflection band and a specific selective reflection center wavelength $\lambda c$. The half-width $\Delta\lambda$ is a difference between the maximum wavelength and the minimum wavelength in the wavelength region in which the flake exhibits a reflectance equal to or higher than 50% of the peak reflectance in the reflection band. For example, if the peak reflectance is 40%, the half-width $\Delta\lambda$ is a difference between the maximum wavelength and the minimum wavelength in the wavelength range in which the flake exhibits a reflectance of 20% or higher. The selective reflection center wavelength $\lambda c$ is an average value of the maximum wavelength and the minimum wavelength (i.e., a value obtained by dividing the sum of these wavelengths by 2). The units of $\Delta\lambda$ and $\lambda c$ may be usually expressed in nm. Since the values of $\Delta\lambda$ and $\lambda c$ of the flake usually match the values of $\Delta\lambda$ and $\lambda c$ of the cholesteric resin layer before crushing, the values of $\Delta\lambda$ and $\lambda c$ of the cholesteric resin layer as they are may be adopted as $\Delta\lambda$ and $\lambda c$ of the flake.

In the present application, the values of $\Delta\lambda$ and $\lambda c$ for specific ones of the flakes may be indicated with a symbol of the flake. For example, $\Delta\lambda$(I-1) and $\lambda c$(I-1) indicate the values of $\Delta\lambda$ and $\lambda c$ of the flake (I-1), respectively.

As the reflectance of the light reflective layer and the flake at each wavelength, an integrated reflectance measured using non-polarized light as incident light may be adopted. The integrated reflectance may be measured using an ultraviolet-visible spectrophotometer (for example, "UV-Vis 770" manufactured by JASCO Corp.) equipped with an integrating sphere. In general, the flake produces a relatively high proportion of light that is diffusely reflected rather than specularly reflected. Thus, the measured value of the integrated reflectance may be adopted as a favorable indicator.

In the light reflective layer (I), the flake (I-1) and the flake (I-2) are different from each other in color. In the light reflective layer (II), the flake (II-1) and the flake (II-2) are different from each other in color.

In the present application, when a certain flake and another certain flake are different in color, specifically, a difference between the selective center wavelengths of the flakes is preferably 70 nm or more. In addition, it is preferable that the selective center wavelengths $\lambda c$ of the flakes belong to different regions among three regions, i.e., a region of 430 nm or more and 490 nm or less, a region of 500 nm or more and 600 nm or less, and a region of more than 600 and 660 or less.

In the present application, $\lambda c$(I-1), $\lambda c$(I-2), $\lambda c$(II-1), and $\lambda c$(II-2) are defined as satisfying the following requirement (a-1) or satisfying the following requirement (a-2).

$$\lambda c(I\text{-}1) < \lambda c(I\text{-}2) \text{ and } \lambda c(II\text{-}1) < \lambda c(II\text{-}2)$$

Requirement (a-1)

$$\lambda c(I\text{-}1) > \lambda c(I\text{-}2) \text{ and } \lambda c(II\text{-}1) > \lambda c(II\text{-}2)$$

Requirement (a-2)

That is, among the flake (I-1), the flake (I-2), the flake (II-1), and the flake (II-2), the flake (I-1) and the flake (II-1) are flakes having a reflection band on the short wavelength side and the flake (I-2) and the flake (II-2) are flakes having a reflection band on the long wavelength side (the above-mentioned (a-1)), or the flake (I-1) and the flake (II-1) are flakes having a reflection band on the long wavelength side and the flake (I-2) and the flake (II-2) are flakes having a reflection band on the short wavelength side (the above-mentioned (a-1)).

Under the definition of the requirement (a-1) or (a-2), the rotation direction of the reflected light from the flake (I-1) and the rotation direction of the reflected light from the flake (I-2) are different from each other, and the rotation direction of the reflected light from the flake (I-1) and the rotation direction of the reflected light from the flake (II-1) are different from each other.

When the light reflective layers (I) and (II) are observed as colors of the same type in the normal observations and satisfy the above-mentioned requirements for the flakes contained therein, the design quality of the light reflective layers which has large variations in the observation for expressing the identification function can be easily exhibited. Specifically, in the observation for expressing the identification function (observation via a device such as a viewer, observation by irradiating polarized light, or the like), a large change in color of the latent image is visually recognized, and as a result, the identification function with the high design quality can be easily exhibited.

Possible combinations of which of the flake (I-1) and the flake (I-2) is on the long-wavelength side in the light reflective layer (I), which of the flake (II-1) and the flake (II-2) is on the long-wavelength side in the light reflective layer (II), and whether the flake (I-1), the flake (I-2), the flake (II-1), and the flake (II-2) each are the clockwise reflection type (R) or the counterclockwise reflection type (L) are shown in Table 1 below.

Table 1

| | (I)Short wavelength side | (I)Long wavelength side | (II)Short wavelength side | (II)Long wavelength side |
|---|---|---|---|---|
| Combination 1 | (I-1)R | (I-2)L | (II-1)L | (I-2)L |
| Combination 2 | (I-1)R | (I-2)L | (II-1)L | (I-2)R |
| Combination 3 | (I-1)L | (I-2)R | (II-1)R | (I-2)L |
| Combination 4 | (I-1)L | (I-2)R | (II-1)R | (I-2)R |
| Combination 5 | (I-2)R | (I-1)L | (II-2)L | (II-1)R |
| Combination 6 | (I-2)R | (I-1)L | (II-2)R | (II-1)R |
| Combination 7 | (I-2)L | (I-1)R | (II-2)L | (II-1)L |
| Combination 8 | (I-2)L | (I-1)R | (II-2)R | (II-1)L |

In a more preferable embodiment, the light reflective layer (I) further contains a flake (I-3), and the light reflective layer (II) further contains a flake (II-3) as multiple types of flakes. In this case, the flake (I-1), the flake (I-2), and the flake (I-3) are different from one another in color, and the flake (II-1), the flake (II-2), and the flakes (II-3) are different in color from one another.

When the light reflective layers (I) and (II) contain the flake (I-3) and the flake (II-3), the light reflective layers (I) and (II) provide further variations in the expression of design quality in observations for expressing the identification function. In addition, these flakes can cooperate to easily achieve selective reflection over a wide wavelength range. As a result, light reflective layers satisfying the formulae (b-1) and (b-2), or the formulae (b-1') and (b-2') (described later) can be easily constituted, and it is possible to obtain layers that have a silver appearance similar to that of a cholesteric resin layer that has been subjected to a broadband treatment. As a result, it is possible to achieve both ease of production and high design quality.

As a more specific embodiment, the selective center wavelengths $\lambda c$ of the flake (I-1), the flake (I-2), and the flake (I-3) may belong to different regions among three regions, i.e., a region of 430 nm or more and 490 nm or less, a region of 500 nm or more and 600 nm or less, and a region of more than 600 and 660 or less. Similarly, the selective center wavelengths $\lambda c$ of the flake (II-1), the flake (II-2), and the flake (II-3) may belong to different regions among three regions, i.e., a region of 430 nm or more and 490 nm or less, a region of 500 nm or more and 600 nm or less, and a region of more than 600 and 660 or less.

The order of the selective center wavelengths $\lambda c(I\text{-}1)$, $\lambda c(I\text{-}2)$, and $\lambda c(I\text{-}3)$ of the respective flakes in the light reflective layer (I) and the order of the selective center wavelengths $\lambda c(II\text{-}1)$, $\lambda c(II\text{-}2)$, and $\lambda c(II\text{-}3)$ of the respective flakes in the light reflective layer (II) are preferably the same. Examples thereof may include relationships satisfying any of the following requirements (a-3) to (a-8):

$$\lambda c(I\text{-}1) < \lambda c(I\text{-}2) < \lambda c(I\text{-}3) \text{ and } \lambda c(II\text{-}1) < \lambda c(II\text{-}2) < \lambda c(II\text{-}3) \qquad \text{Requirement (a-3)}$$

$$\lambda c(I\text{-}1) < \lambda c(I\text{-}3) < \lambda c(I\text{-}2) \text{ and } \lambda c(II\text{-}1) < \lambda c(II\text{-}3) < \lambda c(II\text{-}2) \qquad \text{Requirement (a-4)}$$

λc(I-3) < λc(I-1) < λc(I-2) and λc(II-3) < λc(II-1) < λc(II-2) Requirement (a-5)

λc(I-2) < λc(I-1) < λc(I-3) and λc(II-2) < λc(II-1) < λc(II-3) Requirement (a-6)

λc(I-2) < λc(I-3) < λc(I-1) and λc(II-2) < λc(II-3) < λc(II-1) Requirement (a-7)

λc(I-3) < λc(I-2) < λc(I-1) and λc(II-3) < λc(II-2) < λc(II-1) Requirement (a-8) .

In a case where the above-mentioned preferable requirements are satisfied, possible combinations of which of the above-mentioned regions each of the flakes (I-1) to (I-3) of the light reflective layer (I) belongs to, which of the above-mentioned regions each of the flakes (II-1) to (II-3) of the light reflective layer (II) belongs to, and whether the respective flakes are the clockwise reflection type (R) or the counterclockwise reflection type (L) are shown in Tables 2 to 7 below. In the following tables, the region of 430 nm or more and 490 nm or less is denoted by "blue", the region of 500 nm or more and 600 nm or less is denoted by "green", and the region of more than 600 and 660 or less is denoted by "red".

Table 2. Corresponding to requirement (a-3)

| Combination | (I)Blue | (I)Green | (I)Red | (II)Blue | (II)Green | (III)Red |
|---|---|---|---|---|---|---|
| a3-1 | (I-1)R | (I-2)L | (I-3)R | (II-1)L | (II-2)R | (II-3)R |
| a3-2 | (I-1)R | (I-2)L | (I-3)R | (II-1)L | (II-2)R | (II-3)L |
| a3-3 | (I-1)R | (I-2)L | (I-3)R | (II-1)L | (II-2)L | (II-3)R |
| a3-4 | (I-1)R | (I-2)L | (I-3)R | (II-1)L | (II-2)L | (II-3)L |
| a3-5 | (I-1)R | (I-2)L | (I-3)L | (II-1)L | (II-2)R | (II-3)R |
| a3-6 | (I-1)R | (I-2)L | (I-3)L | (II-1)L | (II-2)R | (II-3)L |
| a3-7 | (I-1)R | (I-2)L | (I-3)L | (II-1)L | (II-2)L | (II-3)R |
| a3-8 | (I-1)R | (I-2)L | (I-3)L | (II-1)L | (II-2)L | (II-3)L |
| a3-9 | (I-1)L | (I-2)R | (I-3)R | (II-1)R | (II-2)R | (II-3)R |
| a3-10 | (I-1)L | (I-2)R | (I-3)R | (II-1)R | (II-2)R | (II-3)L |
| a3-11 | (I-1)L | (I-2)R | (I-3)R | (II-1)R | (II-2)L | (II-3)R |
| a3-12 | (I-1)L | (I-2)R | (I-3)R | (II-1)R | (II-2)L | (II-3)L |
| a3-13 | (I-1)L | (I-2)R | (I-3)L | (II-1)R | (II-2)R | (II-3)R |
| a3-14 | (I-1)L | (I-2)R | (I-3)L | (II-1)R | (II-2)R | (II-3)L |
| a3-15 | (I-1)L | (I-2)R | (I-3)L | (II-1)R | (II-2)L | (II-3)R |
| a3-16 | (I-1)L | (I-2)R | (I-3)L | (II-1)R | (II-2)L | (II-3)L |

Table 3. Corresponding to requirement (a-4)

| Combination | (I)Blue | (I)Green | (I)Red | (II)Blue | (II)Green | (III)Red |
|---|---|---|---|---|---|---|
| a4-1 | (I-1)R | (I-3)R | (I-2)L | (II-1)L | (II-3)R | (II-2)R |
| a4-2 | (I-1)R | (I-3)R | (I-2)L | (II-1)L | (II-3)L | (II-2)R |
| a4-3 | (I-1)R | (I-3)R | (I-2)L | (II-1)L | (II-3)R | (II-2)L |
| a4-4 | (I-1)R | (I-3)R | (I-2)L | (II-1)L | (II-3)L | (II-2)L |
| a4-5 | (I-1)R | (1-3)L | (I-2)L | (II-1)L | (II-3)R | (II-2)R |
| a4-6 | (I-1)R | (I-3)L | (I-2)L | (II-1)L | (II-3)L | (II-2)R |
| a4-7 | (I-1)R | (I-3)L | (I-2)L | (II-1)L | (II-3)R | (II-2)L |
| a4-8 | (I-1)R | (I-3)L | (I-2)L | (II-1)L | (II-3)L | (II-2)L |

(continued)

| Combination | (I)Blue | (I)Green | (I)Red | (II)Blue | (II)Green | (III)Red |
|---|---|---|---|---|---|---|
| a4-9 | (I-1)L | (I-3)R | (I-2)R | (II-1)R | (II-3)R | (II-2)R |
| a4-10 | (I-1)L | (I-3)R | (I-2)R | (II-1)R | (II-3)L | (II-2)R |
| a4-11 | (I-1)L | (I-3)R | (I-2)R | (II-1)R | (II-3)R | (II-2)L |
| a4-12 | (I-1)L | (I-3)R | (I-2)R | (II-1)R | (II-3)L | (II-2)L |
| a4-13 | (I-1)L | (I-3)L | (I-2)R | (II-1)R | (II-3)R | (II-2)R |
| a4-14 | (I-1)L | (I-3)L | (I-2)R | (II-1)R | (II-3)L | (II-2)R |
| a4-15 | (I-1)L | (I-3)L | (I-2)R | (II-1)R | (II-3)R | (II-2)L |
| a4-16 | (I-1)L | (I-3)L | (I-2)R | (II-1)R | (II-3)L | (II-2)L |

Table 4. Corresponding to requirement (a-5)

| Combination | (I)Blue | (I)Green | (I)Red | (II)Blue | (II)Green | (III)Red |
|---|---|---|---|---|---|---|
| a5-1 | (I-3)R | (I-1)R | (I-2)L | (II-3)R | (II-1)L | (II-2)R |
| a5-2 | (I-3)R | (I-1)R | (I-2)L | (II-3)L | (II-1)L | (II-2)R |
| a5-3 | (I-3)R | (I-1)R | (I-2)L | (II-3)R | (II-1)L | (II-2)L |
| a5-4 | (I-3)R | (I-1)R | (I-2)L | (II-3)L | (II-1)L | (II-2)L |
| a5-5 | (I-3)L | (I-1)R | (I-2)L | (II-3)R | (II-1)L | (II-2)R |
| a5-6 | (I-3)L | (I-1)R | (I-2)L | (II-3)L | (II-1)L | (II-2)R |
| a5-7 | (I-3)L | (I-1)R | (I-2)L | (II-3)R | (II-1)L | (II-2)L |
| a5-8 | (I-3)L | (I-1)R | (I-2)L | (II-3)L | (II-1)L | (II-2)L |
| a5-9 | (I-3)R | (I-1)L | (I-2)R | (II-3)R | (II-1)R | (II-2)R |
| a5-10 | (I-3)R | (I-1)L | (I-2)R | (II-3)L | (II-1)R | (II-2)R |
| a5-11 | (I-3)R | (I-1)L | (I-2)R | (II-3)R | (II-1)R | (II-2)L |
| a5-12 | (I-3)R | (I-1)L | (I-2)R | (II-3)L | (II-1)R | (II-2)L |
| a5-13 | (I-3)L | (I-1)L | (I-2)R | (II-3)R | (II-1)R | (II-2)R |
| a5-14 | (I-3)L | (I-1)L | (I-2)R | (II-3)L | (II-1)R | (II-2)R |
| a5-15 | (I-3)L | (I-1)L | (I-2)R | (II-3)R | (II-1)R | (II-2)L |
| a5-16 | (I-3)L | (I-1)L | (I-2)R | (II-3)L | (II-1)R | (II-2)L |

Table 5. Corresponding to requirement (a-6)

| Combination | (I)Blue | (I)Green | (I)Red | (II)Blue | (II)Green | (III)Red |
|---|---|---|---|---|---|---|
| a6-1 | (I-2)L | (I-1)R | (I-3)R | (II-2)R | (II-1)L | (II-3)R |
| a6-2 | (I-2)L | (I-1)R | (I-3)R | (II-2)R | (II-1)L | (II-3)L |
| a6-3 | (I-2)L | (I-1)R | (I-3)R | (II-2)L | (II-1)L | (II-3)R |
| a6-4 | (I-2)L | (I-1)R | (I-3)R | (II-2)L | (II-1)L | (II-3)L |
| a6-5 | (I-2)L | (I-1)R | (I-3)L | (II-2)R | (II-1)L | (II-3)R |
| a6-6 | (I-2)L | (I-1)R | (I-3)L | (II-2)R | (II-1)L | (II-3)L |
| a6-7 | (I-2)L | (I-1)R | (I-3)L | (II-2)L | (II-1)L | (II-3)R |
| a6-8 | (I-2)L | (I-1)R | (I-3)L | (II-2)L | (II-1)L | (II-3)L |
| a6-9 | (I-2)R | (I-1)L | (I-3)R | (II-2)R | (II-1)R | (II-3)R |
| a6-10 | (I-2)R | (I-1)L | (I-3)R | (II-2)R | (II-1)R | (II-3)L |

(continued)

| Combination | (I)Blue | (I)Green | (I)Red | (II)Blue | (II)Green | (III)Red |
|---|---|---|---|---|---|---|
| a6-11 | (I-2)R | (I-1)L | (I-3)R | (II-2)L | (II-1)R | (II-3)R |
| a6-12 | (I-2)R | (I-1)L | (I-3)R | (II-2)L | (II-1)R | (II-3)L |
| a6-13 | (I-2)R | (I-1)L | (I-3)L | (II-2)R | (II-1)R | (II-3)R |
| a6-14 | (I-2)R | (I-1)L | (I-3)L | (II-2)R | (II-1)R | (II-3)L |
| a6-15 | (I-2)R | (I-1)L | (I-3)L | (II-2)L | (II-1)R | (II-3)R |
| a6-16 | (I-2)R | (I-1)L | (I-3)L | (II-2)L | (II-1)R | (II-3)L |

Table 6. Corresponding to requirement (a-7)

| Combination | (I)Blue | (I)Green | (I)Red | (II)Blue | (II)Green | (III)Red |
|---|---|---|---|---|---|---|
| a7-1 | (I-2)L | (I-3)R | (I-1)R | (II-2)R | (II-3)R | (II-1)L |
| a7-2 | (I-2)L | (I-3)R | (I-1)R | (II-2)R | (II-3)L | (II-1)L |
| a7-3 | (I-2)L | (I-3)R | (I-1)R | (II-2)L | (II-3)R | (II-1)L |
| a7-4 | (I-2)L | (I-3)R | (I-1)R | (II-2)L | (II-3)L | (II-1)L |
| a7-5 | (I-2)L | (I-3)L | (I-1)R | (II-2)R | (II-3)R | (II-1)L |
| a7-6 | (I-2)L | (I-3)L | (I-1)R | (II-2)R | (II-3)L | (II-1)L |
| a7-7 | (I-2)L | (I-3)L | (I-1)R | (II-2)L | (II-3)R | (II-1)L |
| a7-8 | (I-2)L | (I-3)L | (I-1)R | (II-2)L | (II-3)L | (II-1)L |
| a7-9 | (I-2)R | (I-3)R | (I-1)L | (II-2)R | (II-3)R | (II-1)R |
| a7-10 | (I-2)R | (I-3)R | (I-1)L | (II-2)R | (II-3)L | (II-1)R |
| a7-11 | (I-2)R | (I-3)R | (I-1)L | (II-2)L | (II-3)R | (II-1)R |
| a7-12 | (I-2)R | (I-3)R | (I-1)L | (II-2)L | (II-3)L | (II-1)R |
| a7-13 | (I-2)R | (I-3)L | (I-1)L | (II-2)R | (II-3)R | (II-1)R |
| a7-14 | (I-2)R | (I-3)L | (I-1)L | (II-2)R | (II-3)L | (II-1)R |
| a7-15 | (I-2)R | (I-3)L | (I-1)L | (II-2)L | (II-3)R | (II-1)R |
| a7-16 | (I-2)R | (I-3)L | (I-1)L | (II-2)L | (II-3)L | (II-1)R |

Table 7. Corresponding to requirement (a-8)

| Combination | (I)Blue | (I)Green | (I)Red | (II)Blue | (II)Green | (III)Red |
|---|---|---|---|---|---|---|
| a8-1 | (I-3)R | (I-2)L | (I-1)R | (II-3)R | (II-2)R | (II-1)L |
| a8-2 | (I-3)R | (I-2)L | (I-1)R | (II-3)L | (II-2)R | (II-1)L |
| a8-3 | (I-3)R | (I-2)L | (I-1)R | (II-3)R | (II-2)L | (II-1)L |
| a8-4 | (I-3)R | (I-2)L | (I-1)R | (II-3)L | (II-2)L | (II-1)L |
| a8-5 | (I-3)L | (I-2)L | (I-1)R | (II-3)R | (II-2)R | (II-1)L |
| a8-6 | (I-3)L | (I-2)L | (I-1)R | (II-3)L | (II-2)R | (II-1)L |
| a8-7 | (I-3)L | (I-2)L | (I-1)R | (II-3)R | (II-2)L | (II-1)L |
| a8-8 | (I-3)L | (I-2)L | (I-1)R | (II-3)L | (II-2)L | (II-1)L |
| a8-9 | (I-3)R | (I-2)R | (I-1)L | (II-3)R | (II-2)R | (II-1)R |
| a8-10 | (I-3)R | (I-2)R | (I-1)L | (II-3)L | (II-2)R | (II-1)R |
| a8-11 | (I-3)R | (I-2)R | (I-1)L | (II-3)R | (II-2)L | (II-1)R |
| a8-12 | (I-3)R | (I-2)R | (I-1)L | (II-3)L | (II-2)L | (II-1)R |

(continued)

| Combination | (I)Blue | (I)Green | (I)Red | (II)Blue | (II)Green | (III)Red |
|---|---|---|---|---|---|---|
| a8-13 | (I-3)L | (I-2)R | (I-1)L | (II-3)R | (II-2)R | (II-1)R |
| a8-14 | (I-3)L | (I-2)R | (I-1)L | (II-3)L | (II-2)R | (II-1)R |
| a8-15 | (I-3)L | (I-2)R | (I-1)L | (II-3)R | (II-2)L | (II-1)R |
| a8-16 | (I-3)L | (I-2)R | (I-1)L | (II-3)L | (II-2)L | (II-1)R |

The light reflective layers preferably satisfy the following formulae (b-1) and (b-2).

$$0.90 \leq B(430\text{-}490)Ave / G(500\text{-}600)Ave \leq 1.05 \quad \text{formula (b-1)}$$

$$0.90 \leq R(600\text{-}660)Ave / G(500\text{-}600)Ave \leq 1.05 \quad \text{formula (b-2)}$$

In the formulae, B(430-490)Ave is an average value of the integrated reflectance of the light reflective layer in wavelengths of 430 nm to 490 nm, G(500-600)Ave is an average value of the integrated reflectance of the light reflective layer in wavelengths of 500 nm to 600 nm, and R(600-660)Ave is an average value of the integrated reflectance of the light reflective layer in wavelengths of 600 nm to 660 nm. The light reflective layers that satisfy the formulae (b-1) and (b-2) may be obtained by adjusting the types and mixing proportions of the flakes that constitute the light reflective layer.
When the light reflective layers satisfy the formulae (b-1) and (b-2), the light reflective layers exhibit uniform reflection in a broad wavelength range within the visible light band, and as a result, the light reflective layers can exhibit an appearance of silver color similar to that of the cholesteric resin layer that has been subjected to the broadband treatment. As a result, although the light reflective layers can be obtained by a simple production method of mixing the flakes that can be produced relatively easily, the light reflective layers can exhibit a high design quality.
From the viewpoint of effectively obtaining the above-mentioned advantageous effects, the light reflective layers preferably satisfy the following formulae (b-1') to (b-2'):

$$0.92 \leq B(430\text{-}490)Ave / G(500\text{-}600)Ave \leq 1.04 \quad \text{formula (b-1')}$$

$$0.92 \leq R(600\text{-}660)Ave / G(500\text{-}600)Ave \leq 1.04 \quad \text{formula (b-2')}.$$

The light reflective layers (I) and (II) preferably have an appearance ranging from pale color to silver. Specifically, it is preferable that the a* value and the b* value of the light reflective layers are each within ±5, and satisfy √(|a*|^2 + |b*|^2) ≤ 5. If the main focus is on achieving a silver color, it is preferable that the a* value and the b* value are each within ±3, and satisfy √(|a*|^2 + |b*|^2) ≤ 3. In prior-art technology, the light reflective layer with such an appearance is achieved mainly using the cholesteric resin layer that has been subjected to the broadband treatment. The light reflective layers in the identification medium of the present invention can exhibit the same silver appearance without relying on the cholesteric resin layer that has been subjected to the broadband treatment. As a result, although the light reflective layers can be obtained by a simple production method of mixing the flakes that can be relatively easily produced, the light reflective layers can exhibit a high design quality.
Regarding the flakes of the materials having cholesteric regularity in the light reflective layers (I) and (II), it is preferable that some of the flakes satisfy the formula (c), and it is even more preferable that the all flakes satisfy the formula (c).

$$0.10 \leq \Delta\lambda/\lambda c \leq 0.2 \quad \text{formula (c)}$$

The upper limit of the value of Δλ/λc is preferably 0.25 or less, and more preferably 0.15 or less. On the other hand,

the lower limit is preferably 0.10 or more, and more preferably 0.12 or more.

The flakes with a value of $\Delta\lambda/\lambda c$ of equal to or less than the above-mentioned upper limit may be easily obtained without performing the broadband treatment of the cholesteric resin layer and may be produced using a polymerizable liquid crystal compound known in the prior art. When the flake with such a reflection band is used, and other requirements of the present invention are met, the resulting light reflective layers satisfy the formulae (b-1) and (b-2) (or formulae (b-1') and (b-2')), and can exhibit a silver color appearance of similar to that of the cholesteric resin layer that has been subjected to the broadband treatment. Thus, in the production step of the flake, the burden of acquiring special materials and the burden of precisely performing steps such as the weak UV irradiation and warming in a plurality of stages are reduced, and thereby low-cost production can be achieved.

On the other hand, when the lower limit of the $\Delta\lambda/\lambda c$ value is equal to or greater than the above-mentioned lower limit, the selective reflection can be more effectively exhibited.

In general, the cholesteric resin layer produced through the broadband treatment has a helical structure whose helical pitch is not constant but has a gradient within the layer. Due to the helical structure having such a pitch gradient, the cholesteric resin layer shows a large $\Delta\lambda/\lambda c$ value, or a $\Delta\lambda$ value which is so large that the $\Delta\lambda/\lambda c$ value cannot be calculated. On the other hand, in the cholesteric resin layer produced without performing the broadband treatment, the helical pitch is often constant within the layer. Thus, the $\Delta\lambda/\lambda c$ value of the cholesteric resin layer is a relatively small value of 0.25 or less. When the $\Delta\lambda/\lambda c$ value is such a relatively small value, the reflection band becomes relatively narrow, and thus a color exhibited by the cholesteric resin layer is monochromatic.

The light reflective layers may contain, as flakes other than the above-mentioned flakes, a flake having a reflection band including a wavelength region exceeding 660 nm. Specifically, in addition to the above-mentioned flakes, a flake (IR) having a selective reflection center wavelength $\lambda c(IR)$ exceeding 660 nm may be contained. By containing such a flake (IR), blue shift during observation from a tilted viewing angle can be reduced. In addition, this makes it possible to express an identification function using incident light in an infrared region.

An average value of the integrated reflectance of the light reflective layer in 430 to 660 nm is preferably 20% or higher, and more preferably 30% or higher. On the other hand, the theoretical upper limit value of the reflectance is 50%. By having such a high reflectance, the light reflective layer can develop a clear color by reflection, and thereby an aesthetically pleasing appearance with the superior identification function can be obtained. In the present invention, employment of the above-mentioned combination of flakes as the materials that constitute the light reflective layers makes it possible to achieve such a high reflectance without performing complex treatments such as the broadband treatment. As in the example shown in FIG. 1 and FIG. 2, when the layers such as the phase difference layer 140 and the covering layer 150 are provided on the upper surface of the light reflective layer 120, the loss of light caused by passing through these layers is usually sufficiently small. In this case, the reflectance of the light reflective layer can be measured by measuring the reflectance of the display surface of the identification medium. In other words, if the reflectance of the display surface of the identification medium is 20% or higher, it can be expected that the reflectance of the light reflective layer is also 20% or higher.

In addition to the flakes described above, the light reflective layers may contain a material that holds the flakes as an integral material. Specifically, the light reflective layers may contain a general medium for ink production. Furthermore, the light reflective layers may contain a diluent for diluting the medium.

The method for forming the light reflective layers is not particularly limited, and any known method can be adopted. For example, the light reflective layers may be formed by preparing a flake-mixed ink containing the above-mentioned flakes, medium, and other optional components, applying the flake-mixed ink onto a suitable substrate, and curing the flake-mixed ink by drying or the like.

[Other components]

The identification medium of the present invention may include any optional components in addition to the light reflective layers and the phase difference layer described above. For example, as illustrated in the identification medium 100 shown in FIG. 1 and FIG. 2, the identification medium may include the light absorption layer, the covering layer, and the adhesive layer.

The light absorption layer is a layer that absorbs incident light. The light absorption layer may be a black layer. The material for the light absorption layer may be any material. However, for example, the material may be a black colored film. The light absorption layer may be provided on the back side of the light reflective layer, that is, at a position on the opposite side to the viewing side of the light reflective layer. If the light reflective layers are reflection circular polarizers, most of the incident light that is not reflected is transmitted. When the light absorption layer is provided on the back side of the light reflective layers, the transmitted light is absorbed, and as a result, the effect of the reflected light can be more clearly visually recognized. On the other hand, if the light absorption layer is not provided on the back side of the light reflective layer, the back side of the light reflective layer is visually recognized, and the effect of the reflected light becomes less clear. However, this can produce a design effect of making the identification medium as a see-through object.

The covering layer may be provided at a position closer to the viewing side than the phase difference layer. The covering layer may be a transparent material such as a glass plate or a resin film. By the provision of the covering layer, the light reflective layer and the phase difference layer can be protected during use.

The adhesive layer is a layer for establishing adhesion of the various layers described above. As the material that constitutes the adhesive layer, a known adhesive that is highly transparent to the extent that the adhesive does not significantly inhibit the transmission of light in the identification medium may be appropriately selected and adopted.

The identification medium may further include an attachment member. The attachment member is a member that functions when the identification medium is attached to an article. A part or all of the attachment member may be those that serve as a decorative member as well. Examples of the attachment member may include a member that extends from the periphery of the identification medium, such as a ring, a clasp, a hook, a wire, a chain, or a string, and a casing that also serves as a decorative member, such as a tray. The attachment member may be directly attached to the light reflective layer and/or the phase difference layer, which are the essential components of the identification medium, or may be bonded to the identification medium via other optional members. Bonding to the attachment member may be any of the followings: attachment by an adhesive, attachment by welder processing, mechanical bonding such as screwing or tying, or the like. Furthermore, the attachment member may be a layer similar to the adhesive layer, in which case the identification medium and a member to be attached may be bonded via the layer.

[Examples of action of identification medium]

When the identification medium of the present invention is used, incident light is made incident on the display surface of the identification medium, and reflected light reflected by the light reflective layers is observed.

Examples of the light to be made incident on the identification medium may include non-polarized light, linearly polarized light, circularly polarized light, and elliptically polarized light. If the light to be made incident thereon is non-polarized light, the identification medium may be utilized by selectively observing the linearly polarized light component or a circularly polarized light component of the reflected light in the observation of the reflected light. As the non-polarized light to be made incident thereon, general ambient light such as sunlight or indoor lighting may be used.

Selective observation of the linearly polarized light component of the reflected light may be performed by visually observing the reflected light via a linear polarizer for observation. Selective observation of the circularly polarized light component of the reflected light may be performed by visually observing the reflected light via a circular polarizer for observation. To avoid interferance with the incidence of ambient light, the linear polarizer for observation and the circular polarizer for observation may be usually used while being kept separate from the identification medium. The lower limit of the separation distance may be adjusted as appropriate depending on the size of the identification medium and the linear polarizer for observation, and the like. However, the lower limit may be usually 100 mm or more. On the other hand, the upper limit of the separation distance may be adjusted as appropriate within a range where the reflected light of the identification medium can be observed. However, the upper limit may be usually 30 m or less.

The linear polarizer for observation used at a position away from the identification medium as described above may be a product exclusively used for the use method of the present invention. Alternatively, the linear polarizer for observation may be a general linear polarizer used for other purposes. For example, since many commercially available polarized sunglasses can function as a linear polarizer, such commercially available polarized sunglasses may be used as the linear polarizer for observation. Examples of the circular polarizer for observation may include a circular polarizer constituted by combining a linear polarizer and a phase difference film, and a circular polarizer including a layer of cholesteric material (for example, a circular polarizer described in International Publication No. 2020/121791).

A more specific example of how the identification medium of the present invention expresses the identification function will be described with reference to the example of FIG. 1 and FIG. 2. In the following description, an example is described in which the light reflective layer (I) 121 contains only the flakes (I-1) and (I-2) as flakes, the light reflective layer (II) 122 contains only the flakes (II-1) and (II-2) as flakes, the flake (I-1) is a counterclockwise reflection circular polarizer (i.e., a reflection circular polarizer that selectively reflects a counterclockwise circularly polarized light component of the incident light) that reflects red light with $\lambda c$ of 650 nm as reflected light, the flake (I-2) is a clockwise reflection circular polarizer (i.e., a reflection circular polarizer that selectively reflects a clockwise circularly polarized light component of the incident light) that reflects blue light with $\lambda c$ of 450 nm as reflected light, the flake (II-1) is a clockwise reflection circular polarizer that reflects red light with $\lambda c$ of 650 nm as reflected light, the flake (II-2) is a clockwise reflection circular polarizer that reflects blue light with $\lambda c$ of 450 nm as reflected light, the phase difference layer 140 is a layer the entirety of which functions as a $\lambda/4$ wave plate, the incident light is non-polarized light, and the emitted light is observed via a linear polarizer. This example corresponds to Combination 6 in Table 1 and Example 11 in Examples described below.

The non-polarized light incident on the region 160A of the display surface 160 of the identification medium 100 is transmitted and travels downward through the transparent covering layer 150 and adhesive layer 132, and then reaches the phase difference layer 140. As the light is transmitted downward through the phase difference layer 140, a linearly polarized light component of the light is converted into a circularly polarized light component, while a circularly polarized

light component is converted into a linearly polarized light component. However, since the original incident light is non-polarized light, this does not result in any change in the polarization state.

When the light further reaches the light reflective layer (I) 121, the counterclockwise circularly polarized light component within the reflection band of the flake (I-1) and the clockwise circularly polarized light component within the reflection band of the flake (I-2) are reflected and travel upward, while the other components travel downward through the reflective layer 122 and are absorbed by the light absorption layer 110. The reflected light is transmitted upward through the phase difference layer 140, where it is converted into the linearly polarized light, and is emitted from the region 160A of the display surface 160 as light containing a mixture of a plurality of linearly polarized light components with color tones depending on the reflection bands. When the circularly polarized light passes through the λ/4 wave plate, the circularly polarized light is converted into linearly polarized light, and the polarization direction of the converted light is a direction that makes an angle of 45° relative to the slow axis of the λ/4 wave plate. The angular direction forming such an angle when the transmitted light is counterclockwise circularly polarized light is opposite to the angular direction when the transmitted light is clockwise circularly polarized light. Thus, the polarization directions of these polarized lights becomes orthogonal to each other. As a result, the polarization direction of the red linearly polarized light originating from the reflection of the flake (I-1) and the polarization direction of the blue linearly polarized light originating from the reflection of the flake (I-2) are orthogonal to each other. When this is observed via a linear polarizer, the color tone changes between blue and red by changing the azimuth angle of the identification medium 100 relative to the transmission axis direction of the linear polarizer. That is, when the transmission axis direction of the linear polarizer aligns with the polarization direction of the red linearly polarized light, the red color becomes most prominent, and when the transmission axis direction of the linear polarizer aligns with the polarization direction of the blue linearly polarized light, the blue color becomes most prominent. At positions in between, intermediate colors are visually recognized depending on the azimuth angle.

On the other hand, the non-polarized light incident on the region 160B of the display surface 160 of the identification medium 100 is transmitted through the transparent covering layer 150 and the adhesive layer 132 downward, reaches the phase difference layer 140, is transmitted through the phase difference layer 140 without changing its polarization state, and reaches the light reflective layer (II) 122. In the light reflective layer (II), the clockwise circularly polarized light component in the reflection band of the flake (II-1) and the clockwise circularly polarized light component in the reflection band of the flake (II-2) are reflected and travel upward, while the other components are transmitted downward through the reflective layer 122 and are absorbed by the light absorption layer 110. The reflected light is transmitted through the phase difference layer 140 upward, where it is converted into linearly polarized light, and is emitted from the region 160B of the display surface 160 as light containing a mixture of a plurality of linearly polarized light components with color tones depending on the reflection bands. Herein, the reflected light from the flake (II-1) and the reflected light from the flake (II-2) have the same rotation direction, and thereby the polarization direction of the red linearly polarized light originating from reflection from the flake (II-1) and the polarization direction of the blue linearly polarized light originating from reflection from the flake (II-2) are parallel to each other. When this phenomenon is observed via a linear polarizer, the brightness changes by changing the azimuth angle of the identification medium 100 relative to the transmission axis direction of the linear polarizer. However, the color tone is visually recognized as magenta, which is an intermediate color between blue and red, and does not change thereby.

Thus, when the relative angular relationship between the identification medium 100 and the linear polarizer for observation is changed, a phenomenon is visually recognized in which the color tone of the region 160B remains unchanged and only the brightness thereof changes while the color tone of the region 160A significantly changes. Furthermore, if the amount of light reflected by the flake (I-1) and the amount of light reflected by the flake (I-2) are significantly different from each other, the brightness of the region 160A can also be changed significantly by changing such an angular relationship.

On the other hand, when the identification medium 100 with the non-polarized light incident thereon is observed without using the linear polarizer for observation, the observer observes the light emitted from the region 160A, which is a mixture of a blue linearly polarized light component and a red linearly polarized light component with mutually orthogonal polarization directions. The observer also observes the light emitted from the region 160B, which is a mixture of a blue linearly polarized light component and a red linearly polarized light component with mutually parallel polarization directions. Human vision cannot recognize the difference in the polarization states of these lights, and therefore the observer cannot recognize the difference between these lights. Furthermore, even if the relative angular relationship between the identification medium 100 and the observer changes, the observer cannot recognize any change based on the change in the polarization state. Accordingly, the observer visually recognizes the color tone of magenta, which is not changed, in the region 160A as well as in the region 160B.

In summary, because the rotation direction of the reflected light from the flake (I-1) and the rotation direction of the reflected light from the flake (I-2) are different from each other, the color tone visually recognized in the light reflective layer (I) changes based on the change in the relative angular relationship with the linear polarizer for observation. In addition, because the rotation direction of the reflected light from the flake (I-1) and the rotation direction of the reflected light from the flake (II-1) are different each other, the way in which the color tone changes differs between the light reflective layer (I) and

the light reflective layer (II). Thus, by having these characteristics, the identification medium of the present invention can provide a special effect in which a change in relative color tone and brightness is observed only when passing through the linear polarizer for observation. Such a special effect cannot be obtained with a replica that can be easily obtained using an ordinary technique such as printing. Thus, the identification medium of the present invention exhibits a superior identification function and a superior counterfeit prevention function when used in this manner.

Utilizing such a change in the relative brightness, an image such as a character or a figure can be displayed on the display screen. An image that is not observed by a normal observation but is observed only by a specific observation using the identification medium in this manner is referred to as a "latent image" of the identification medium.

In the above-mentioned example, both the flake (II-1) and the flake (II-2) are clockwise reflection circular polarizers, and the color tone of the region 160B did not change when the relative angular relationship between the identification medium 100 and the linear polarizer for observation was changed. In contrast, when the flake (II-1) is a clockwise reflection circular polarizer and the flake (II-2) is a counterclockwise reflection circular polarizer (corresponding to combination 5 in Table 1), the color tone of the region 160B also changes when the relative angular relationship between the identification medium 100 and the linear polarizer for observation is changed, and the manner of change can be contrasted to that of the region 160A. In this manner, by incorporating the flakes with different rotation directions of reflected light in the respective light reflective layers (I) and (II), it is possible to achieve even greater variation in the design quality of the light reflective layers in observation for expressing the identification function.

In the above-mentioned example, an example of the identification medium that has a phase difference layer was described. However, when the identification medium does not have a phase difference layer, a similar identification function can be expressed by observing via a viewer that is a combination of a phase difference layer and a linear polarizer and changing the azimuth angle relationship between the slow axis of the phase difference layer and the transmission axis of the linear polarizer when an observation is performed to express the identification function. Alternatively, when the identification medium does not have a phase difference layer, the identification function can be expressed by alternately using a clockwise circular polarizer and a counterclockwise circular polarizer and comparing the observation results via them.

[Specific examples of cholesteric resin layer]

The material having cholesteric regularity, which is the material of the flakes that are the components of the light reflective layer, and the cholesteric resin layer as an example thereof will be described below.

The cholesteric regularity is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules in the layer of a material have the cholesteric regularity, the molecules are arrayed in a constant direction on a first plane in the layer. The direction of the molecular axes on a subsequent second plane stacking on the first plane in the layer are shifted by a small angle, relative to the direction of the molecular axes on the first plane. The direction of the molecular axes on a subsequent third plane staking on the second plane are further shifted by an angle, relative to the direction of the molecular axes on the second plane. In this manner, the angles of the molecular axes in these planes are sequentially shifted (twisted) on the stacking planes. The structure in which the directions of the molecular axes are twisted as described above is usually a helical structure, which is an optically chiral structure.

A cholesteric resin layer is a layer obtained by curing a curable liquid crystal compound that is exhibiting a cholesteric liquid crystal phase. For example, a cholesteric resin layer may be obtained by polymerizing a polymerizable liquid crystal compound in a state where the compound is exhibiting a cholesteric liquid crystal phase. More specifically, a cholesteric resin layer may be obtained by applying a liquid crystal composition containing a polymerizable liquid crystal compound onto an appropriate substrate or the like to form a layer, causing orientation of the compound in a cholesteric liquid crystal phase, and curing the layer.

As the polymerizable liquid crystal compound, a photopolymerizable liquid crystal compound is preferable. As the photopolymerizable liquid crystal compound, a photopolymerizable liquid crystal compound that is polymerizable by irradiation with active energy rays may be used. As the active energy rays, energy rays that is capable of promoting polymerization reactions of photopolymerizable liquid crystal compounds may be adopted from among a wide range of energy rays such as visible light, ultraviolet rays, and infrared rays, with ionizing radiation such as ultraviolet rays being particularly preferable. Among these, as the photopolymerizable liquid crystal compound suitably used in the cholesteric liquid crystal composition, a rod-like liquid crystal compound having two or more reactive groups within one molecule is preferable, and a compound represented by the formula (1) is particularly preferable.

$$R^3\text{-}C^3\text{-}D^3\text{-}C^5\text{-}M\text{-}C^6\text{-}D^4\text{-}C^4\text{-}R^4 \qquad \text{formula (1)}$$

In the formula (1), $R^3$ and $R^4$ are reactive groups, each independently representing a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group. When the polymerizable liquid crystal compound has these reactive groups, a liquid crystal composition cured layer obtained by curing the liquid crystal composition can have a high mechanical strength.

In the formula (1), $D^3$ and $D^4$ each independently represent a group selected from the group consisting of a single bond, a linear or branched alkyl group of 1 to 20 carbon atoms, and a linear or branched alkylene oxide group of 1 to 20 carbon atoms.

In the formula (1), $C^3$ to $C^6$ each independently represent a group selected from the group consisting of a single bond, -O-, -S-, -S-S-, -CO-, -CS-, -OCO-, $-CH_2-$, - $OCH_2-$, -CH=N-N=CH-, -NHCO-, -O-(C=O)-O-, $-CH_2-(C=O)-O-$, and $-CH_2O-(C=O)-$.

In the formula (1), M represents a mesogen group. In particular, M represents a group obtained by bonding same or different 2 to 4 skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not be substituted, by a bonding group such as -O-, -S-, -S-S-, - CO-, -CS-, -OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Examples of the substituents which the mesogen group M may have may include a halogen atom, an alkyl group of 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, -NR-$^5$-C(=O)-$R^5$, $-C(=O)-NR^5R^7$, and $-O-C(=O)-NR^5R^7$. Herein, $R^5$ and $R^7$ represent a hydrogen atom or an alkyl group of 1 to 10 carbon atoms. When $R^5$ and $R^7$ are an alkyl group, the alkyl group may have an intervening -O-, - S-, -O-C(=O)-, -C(=O)-O-, -O-C(=O)-O-, $-NR^6-C(=O)-$, $-C(=O)-NR^6-$, $-NR^6-$, or -C(=O)- (with a proviso that cases where the intervening group is two or more contiguous -O-'s or - S-'s are excluded). Herein, $R^6$ represents a hydrogen atom or an alkyl group of 1 to 6 carbon atoms.

Examples of the substituents in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15 carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

It is preferable that the rod-like liquid crystal compound has an asymmetric structure. Herein, the asymmetric structure refers to a structure in which $R^3-C^3-D^3-C^5-M-$ and $-M-C^6-D^4-C^4-R^4$ are different from each other in the formula (1) with the mesogen group M as its center when they are compared with each other. By using the compound with an asymmetric structure as the rod-like liquid crystal compound, it is possible to further enhance the orientation uniformity.

Preferable specific examples of the rod-like liquid crystal compound may include the following compounds (B1) to (B14). However, such rod-like liquid crystal compounds are not limited to the following compounds.

[Chemical formula 1]

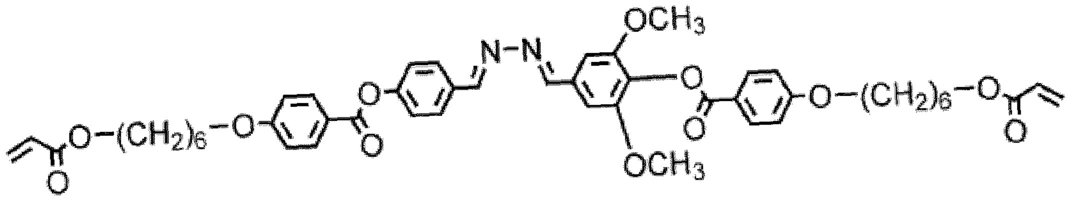

(B1)

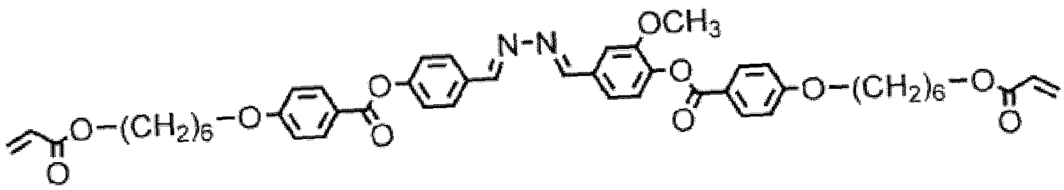

(B2)

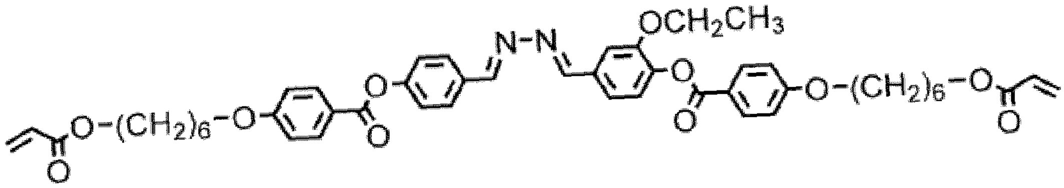

(B3)

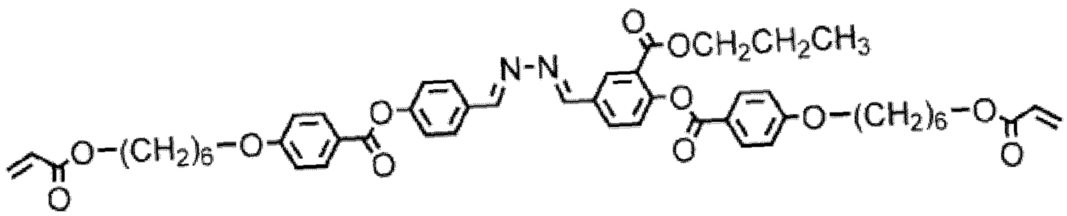

(B4)

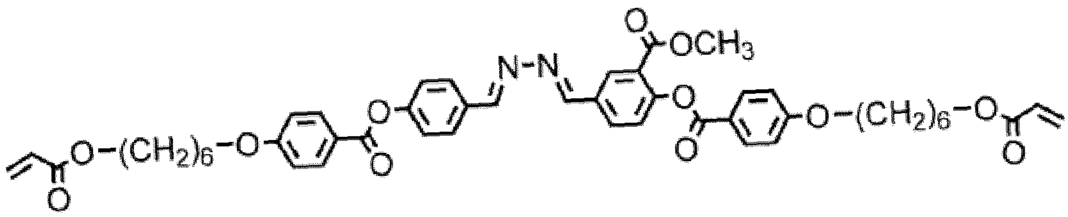

(B5)

[Chemical formula 2]

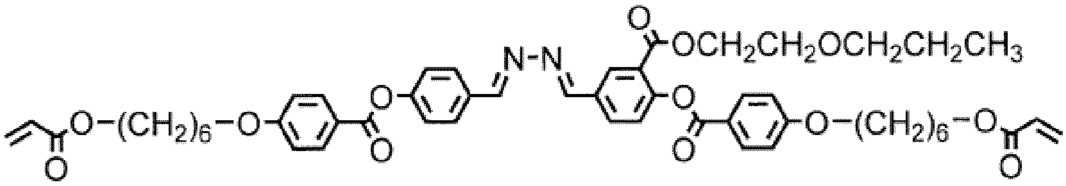

(B6)

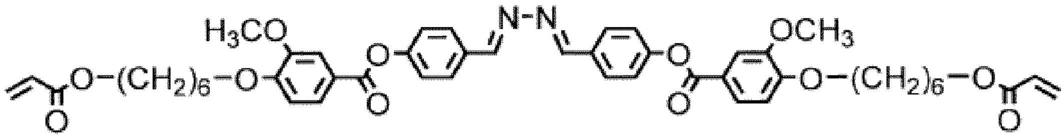

(B7)

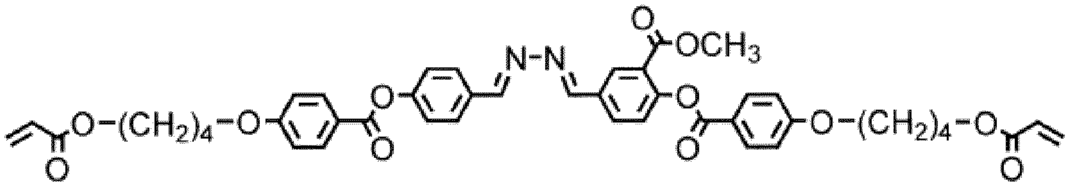

(B8)

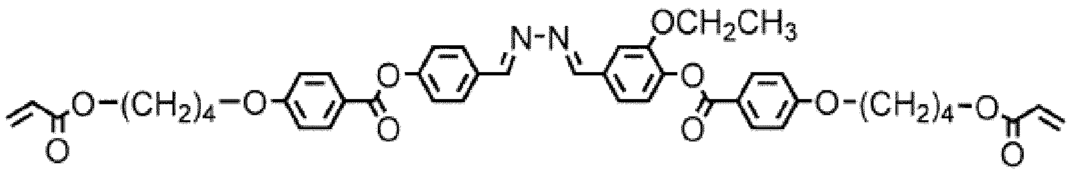

(B9)

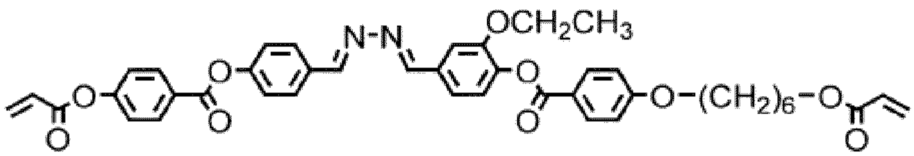

(B10)

[Chemical formula 3]

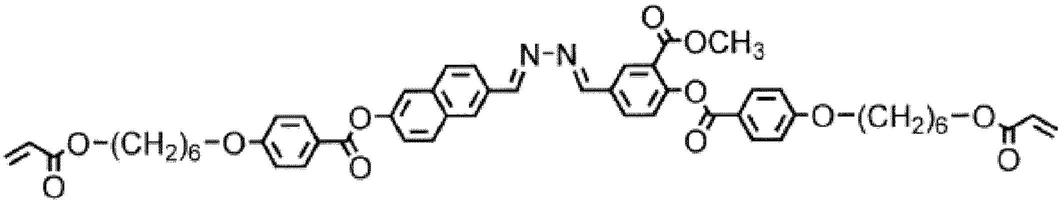

(B11)

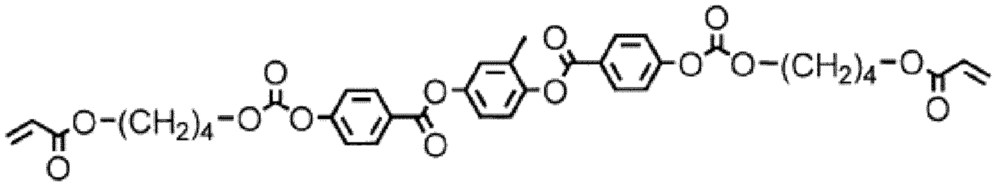

(B12)

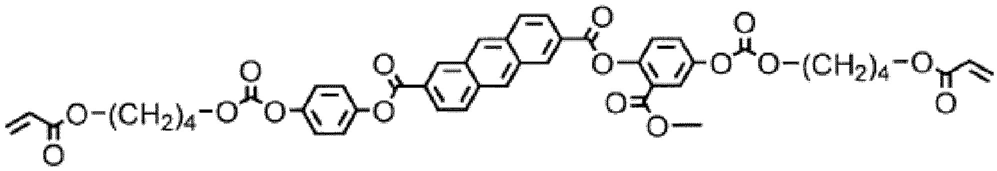

(B13)

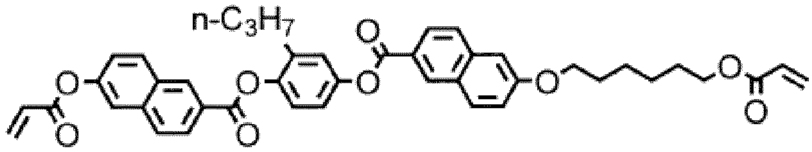

(B14)

When the liquid crystal composition contains the above-described rod-like liquid crystal compound, it is preferable that the liquid crystal composition includes a compound represented by the formula (2) as an orientation aid in combination with the rod-like liquid crystal compound.

$$R^1\text{-}A^1\text{-}B\text{-}A^2\text{-}R^2 \qquad (2)$$

In the formula (2), $R^1$ and $R^2$ are each independently a group selected from the group consisting of a linear or branched alkyl group of 1 to 20 carbon atoms, a linear or branched alkylene oxide group of 1 to 20 carbon atoms, a hydrogen atom, a halogen atom, a hydroxyl group, a carboxyl group, a (meta)acrylic group which may be accompanied with an intervening optional bonding group, an epoxy group, a mercapto group, an isocyanate group, an amino group, and a cyano group.

The alkyl group and the alkylene oxide group may be unsubstituted or substituted with one or more halogen atoms. In addition, the halogen atom, hydroxyl group, carboxyl group, (meta)acrylic group, epoxy group, mercapto group, isocyanate group, amino group, and cyano group may be bonded to a C1-C2 alkyl group and alkylene oxide group.

Preferable examples of $R^1$ and $R^2$ may include a halogen atom, a hydroxyl group, a carboxyl group, a (meth) acrylic group, an epoxy group, a mercapto group, an isocyanate group, an amino group, and a cyano group.

It is preferable that one or more of $R^1$ and $R^2$ are a reactive group. When the compound represented by the above-mentioned formula (2) has a reactive group as at least one of $R^1$ and $R^2$, the compound is fixed in the cured layer of the liquid crystal composition at the time of curing, so that a stronger layer can be formed. Herein, examples of the reactive group may include a carboxyl group, a (meth)acrylic group, an epoxy group, a mercapto group, an isocyanate group, and an amino group.

In the formula (2), $A^1$ and $A^2$ each independently represent a group selected from the group consisting of a 1,4-phenylene group, a 1,4-cyclohexylene group, a cyclohexene-1,4-ylene group, a 4,4'-biphenylene group, a 4,4'-bicyclohexylene group, and a 2,6-naphthylene group. The 1,4-phenylene group, 1,4-cyclohexylene group, cyclohexene-1,4-ylene group, 4,4'-biphenylene group, 4,4'-bicyclohexylene group, and 2,6-naphthylene group are not substituted or may

be substituted with one or more substituents such as a halogen atom, a hydroxyl group, a carboxyl group, a cyano group, an amino group, and a C1-C10 alkyl group and halogenated alkyl group. When two or more substituents are present in each of $A^1$ and $A^2$, they may be the same as, or different from, each other.

Particularly preferable examples of $A^1$ and $A^2$ may include groups selected from the group consisting of a 1,4-phenylene group, a 4,4'-biphenylene group, and a 2,6-naphthylene group. These aromatic ring skeletons are relatively rigid compared to alicyclic skeletons, and the affinity of the groups to mesogens of the rod-like liquid crystal compound is high and the orientation uniformity becomes much higher.

In the formula (2), B is selected from the group consisting of a single bond, -O-, -S-, -S-S-, -CO-, -CS-, - OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Particularly preferable examples of B may include a single bond, -O-(C=O)-, and -CH=N-N=CH-.

Particularly preferable specific examples of the compound represented by the formula (2) may include the following compounds (A1) to (A10). As these compounds, one type thereof may be solely used, and two or more types thereof may also be used in combination at any ratio.

[Chemical formula 4]

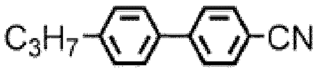
(A1)

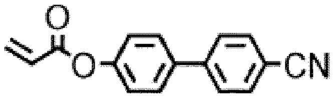
(A2)

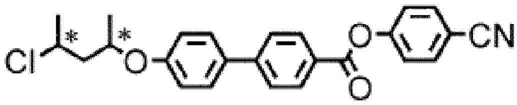
(A3)

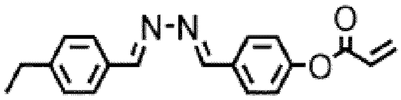
(A4)

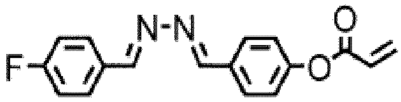
(A5)

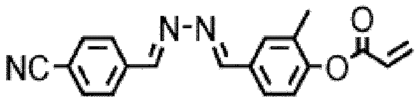
(A6)

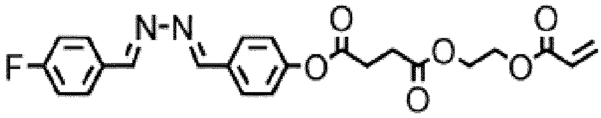
(A7)

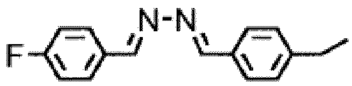
(A8)

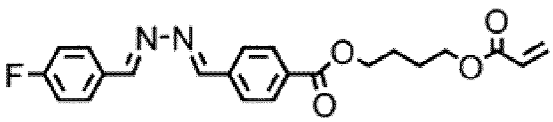
(A9)

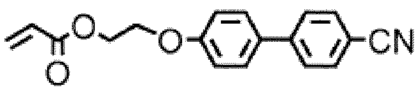
(A10)

In the above-mentioned compound (A3), **"*"** represents a chiral center.

The weight ratio represented by (total weight of the compound represented by the formula (2))/(total weight of the rod-like liquid crystal compound) is preferably 0.001 or more, more preferably 0.01 or more, and further preferably 0.05 or more, and is preferably 1 or less, and more preferably 0.65 or less. By setting the above-mentioned weight ratio to the above-mentioned lower limit value or more, the orientation uniformity in the layer of the liquid crystal composition can be enhanced. By setting the weight ratio to the upper limit value or less, the orientation uniformity can be enhanced. In addition, the stability of the liquid crystal phase of the liquid crystal composition can be enhanced as well. Furthermore, since the refractive index anisotropy $\Delta n$ of the liquid crystal composition can be made high, it is possible to stably obtain a cured layer of the liquid crystal composition that has desired optical properties such as a property of selectively reflecting circularly polarized light, for example. Herein, the total weight of the compound(s) represented by the formula (2) is the weight of a compound represented by the formula (2) when one type thereof is used, and is the total weight when two or more types thereof are used. Similarly, the total weight of the rod-like liquid crystal compound(s) is the weight of the rod-like liquid crystal compound when one type thereof is used, and is the total weight when two or more types thereof are used.

When the compound represented by the formula (2) is used in combination with the rod-like liquid crystal compound, the molecular weight of the compound represented by the formula (2) is preferably less than 600, and the molecular weight of the rod-like liquid crystal compound is preferably 600 or more. With this configuration, the compound represented by the formula (2) can enter into the gap of the rod-like liquid crystal compound that has a molecular weight larger than that of the compound represented by the formula (2), and so the orientation uniformity can be improved.

The liquid crystal composition for forming a cholesteric resin layer may further include other optional components that constitute the cholesteric resin layer and solvents that can facilitate the handling of the liquid crystal composition. Examples of the optional components may include a chiral agent, a polymerization initiator, and a surfactant. Specific examples of the optional components and solvents as well as the liquid crystal composition may include those described in Japanese Patent Application Laid-Open No. 2019-188740 A.

In the present application, it is preferable that all the flakes constituting the light reflective layers are cured products of liquid crystal compositions, and that the liquid crystal compositions include a common polymerizable liquid crystal compound. Specifically, it is preferable that the liquid crystal compositions for producing all of the cholesteric resin layers used to obtain various types of flakes commonly include any of the above-mentioned rod-like liquid crystal compounds as the polymerizable liquid crystal compound. In addition, it is more preferable that the liquid crystal compositions for all of the flakes have the same composition except for the mixing proportion of the chiral agent, and that the reflection band is adjusted by the proportion of the chiral agent. By the employment of the flakes including the common component, a good color tone can be obtained. Furthermore, the deterioration with the lapse of time of use of the identification medium can thereby be made relatively uniform, whereby loss of the aesthetic appearance and loss of the identification function due to deterioration over time can be reduced.

The method for forming the cholesteric resin layer using the liquid crystal composition is not particularly limited, and any known method may be used. Specifically, the cholesteric resin layer may be formed by applying the liquid crystal composition onto the surface of a support film that has an orientation regulation force, performing an orientation treatment as necessary, and then curing the polymerizable material that is the constituent of the liquid crystal composition using an appropriate method such as ultraviolet irradiation.

[Specific examples of phase difference layer]

Examples of the phase difference layer may include a region that functions as the $\lambda/4$ wave plate and a region that functions as a $\lambda/2$ wave plate, which have been exemplified above. The region that functions as the $\lambda/4$ wave plate is particularly preferable.

Examples of a material that constitutes the phase difference layer may include various solid materials having optical anisotropy. As an example thereof, a stretched film obtained by stretching a transparent material may be mentioned. More specifically, a film obtained by stretching an optically isotropic film and thereby imparting an in-plane retardation Re capable of functioning as a $\lambda/4$ wave plate or a $\lambda/2$ wave plate to the film may be mentioned. The stretched film is preferable in that the film can be obtained relatively inexpensively, easily imparted with a desired value of Re, and easily formed into any desired shape.

As another example of the material that constitutes the phase difference layer, a cured product of a liquid crystal compound can be mentioned. One of the specific examples of the phase difference layer is a layer obtained by curing a curable liquid crystal compound oriented in a liquid crystal state exhibiting a phase difference capable of functioning as a $\lambda/4$ wave plate or a $\lambda/2$ wave plate. Examples of such a layer and a method for producing the layer may include those described in International Publication No. 2019/116995. The cured product of the liquid crystal compound can be easily formed into a single film that has different phase differences depending on parts of the film. Thus, such a cured product is particularly preferable when it is required to form a single film as the patterned phase difference layer.

[Article]

The article of the present invention includes the identification medium of the present invention.

Examples of the article may include various articles such as clothing, a shoe, a hat, an accessory, jewelry, and a daily necessity. The article of the present invention is capable of having the identification function by including the identification medium. Having such an identification function makes it possible to identify the identification medium and the article as authentic and not counterfeit products. In addition, the identification medium can provide a design effect to the article. The identification medium may be provided to the article as an ornament, part, or accessory for the article, such as a tag, a charm, a patch, or a sticker.

The article of the present invention may further include a polarizer viewer in addition to the identification medium of the present invention. Examples of the polarizer viewer may include a polarizer viewer including an observation polarizer such as a linear polarizer for observation or a circular polarizer for observation described above, a polarizer viewer being attached to an article so that the identification medium can be observed via the observation polarizer. The polarizer viewer may have the shape of a tag, for example, and may be attached to an article body via a string or the like. Further including the polarizer viewer in addition to the identification medium in this manner allows a general article user to easily examine the identification medium.

[Examples]

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure in the atmospheric air, unless otherwise specified.

In the following description, as the commercially available adhesive, a transparent tackiness tape "LUCIACS CS9621T" (thickness: 25 μm, visible light transmittance: 90% or higher, in-plane retardation: 3 nm or less) manufactured by Nitto Denko Corporation was used.

In the following description, the term "CLC" may be used as an abbreviation to indicate a cholesteric resin layer or flakes obtained by crushing the cholesteric resin layer.

In the following description, regarding the numbers of the light reflective layers, those corresponding to the light reflective layer (II) described above are indicated by numbers with the suffix **"-2",** and those corresponding to the light reflective layer (I) are indicated by numbers without any suffix. For example, the light reflective layers (1) and (1-2) correspond to specific examples of the light reflective layers (I) and (II) described above, respectively.

[Method for measuring reflectance of CLC layer]

The support film was peeled off from the multilayer member to obtain a CLC layer. The reflectance of the CLC layer when non-polarized light (wavelength 300 nm to 950 nm) was incident on the CLC layer was measured using an ultraviolet-visible spectrophotometer ("UV-Vis 770" manufactured by JASCO Corp.) equipped with an integrating sphere.

[Method for measuring rotation direction of circularly polarized light reflected by CLC layer]

The CLC layer was irradiated with non-polarized light, and reflected light of the non-polarized light was observed via a clockwise circular polarizing plate and a counterclockwise circular polarizing plate to determine whether the rotation direction of the circularly polarized light as the reflected light was clockwise or counterclockwise.

[Method for measuring in-plane retardation and slow axis direction]

The in-plane retardation and the slow axis direction were measured using a phase difference meter ("Axoscan" manufactured by Axometrics, Inc.) at a measurement wavelength of 550 nm.

[Measurement of average particle diameter of flake]

The particle size distribution of the flake was measured by a laser scattering method, and the average particle diameter was determined from the particle size distribution. A laser diffraction/scattering particle size distribution measuring device (LA-960 manufactured by Horiba, Ltd.) was used as the measuring instrument.

[Production Example 1. Production of broadband clockwise circularly polarizing red reflective CLC layer]

(P1-1. Liquid crystal composition)

A liquid crystal composition was prepared by mixing 100 parts of a photopolymerizable liquid crystal compound represented by the following formula (X1), 25 parts of a photopolymerizable non-liquid crystal compound represented by the following formula (X2), 7 parts of a chiral agent ("LC756" manufactured by BASF SE), 5 parts of a photopolymerization initiator ("Irgacure 907" manufactured by Ciba Japan), 0.15 part of a surfactant ("S-420" manufactured by AGC Seimi Chemical Co., Ltd.), and 320 parts of cyclopentanone as a solvent.

[Chemical formula 5]

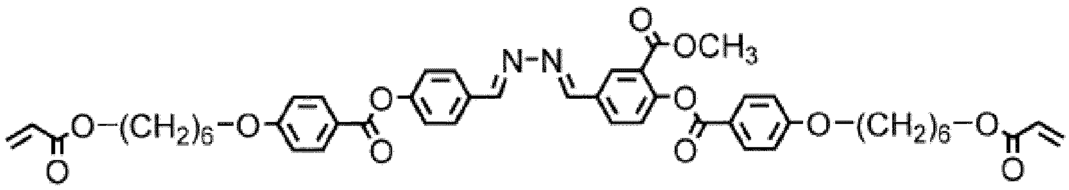

(X1)

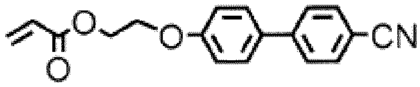

(X2)

(P1-2. Multilayer member including CLC layer)

As a support film, a long-length polyethylene terephthalate film ("A4100" manufactured by Toyobo Co., Ltd.; thickness 100 μm) was prepared. This support film was attached to a feeding unit of a film conveyance machine, and the following operations were performed while conveying the support film in the long-length direction.

The surface of the support film was subjected to a rubbing treatment in the long-length direction parallel to the conveying direction. Subsequently, the liquid crystal composition obtained in (P1-1) was applied onto the surface of the support film, which had been subjected to the rubbing treatment, using a die coater, thereby forming a layer of the liquid crystal composition. This liquid crystal composition layer was subjected to an orientation treatment by heating at 120°C for 5 minutes, so that the liquid crystal composition was oriented so as to exhibit a cholesteric liquid crystal phase. After that, the liquid crystal composition layer was irradiated with ultraviolet rays of 830 $mJ/cm^2$ to be cured. As a result, a multilayer member (CLC_RaR) including the support film and a red reflective CLC layer (thickness: 3 μm) having a circularly polarized light separation function was obtained.

The reflectance of the CLC layer of this multilayer member (CLC_RaR) was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the circularly polarized light reflected by the CLC layer was measured using the measurement method described above, it was found to be clockwise. The CLC layer showed a red color when visually observed under natural light.

[Production Example 2. Production of broadband counterclockwise circularly polarizing red reflective CLC layer]

A multilayer member (CLC_RaL) including a support film and a CLC layer (thickness: 3 μm) having a circularly polarized light separation function was produced by the same manner as that of Production Example 1 except that 7.1 parts of a compound represented by the following formula (X3) (D-mannitol,1,4:3,6-dihydro-,2,5-bis[4-[[[6-[[[4-[(1-oxo-2-propen-1-yl)oxy]butoxy]carbonyl]oxy]-2-naphthalenyl]carbonyl]oxy]benzoate]) was used as the chiral agent instead of "LC756" manufactured by BASF SE. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the circularly polarized light reflected by the CLC layer was measured using the measurement method described above, it was found to be counterclockwise. The CLC layer showed a red color when visually observed under natural light.

[Chemical formula 6]

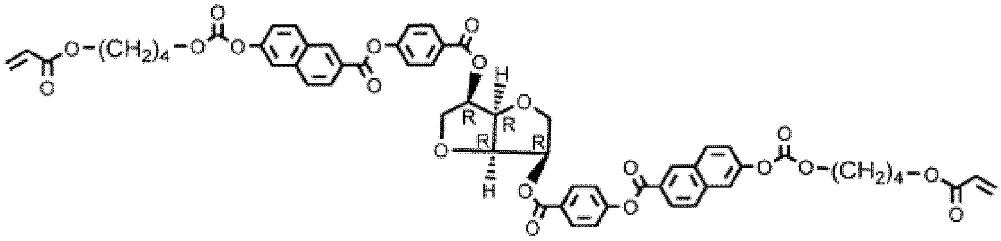

(X 3)

[Production Example 3. Production of broadband clockwise circularly polarizing green reflective CLC layer]

A multilayer member (CLC_GaR) including a support film and a CLC layer (thickness: 3 μm) having a circularly polarized light separation function was produced by the same manner as that of Production Example 1 except that the amount of the chiral agent ("LC756" manufactured by BASF SE) was changed to 8.1 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the circularly polarized light reflected by the CLC layer was measured using the measurement method described above, it was found to be clockwise. The CLC layer showed a green color when visually observed under natural light.

[Production Example 4. Production of broadband counterclockwise circularly polarizing green reflective CLC layer]

A multilayer member (CLC_GaL) including a support film and a CLC layer (thickness: 3 μm) having a circularly polarized light separation function was produced by the same manner as that of Production Example 2 except that the amount of the chiral agent (X3) was changed to 8.4 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the circularly polarized light reflected by the CLC layer was measured using the measurement method described above, it was found to be counterclockwise. The CLC layer showed a green color when visually observed under natural light.

[Production Example 5. Production of broadband clockwise circularly polarizing blue reflective CLC layer]

A multilayer member (CLC_BaR) including a support film and a CLC layer (thickness: 3 μm) having a circularly polarized light separation function was produced by the same manner as that of Production Example 1 except that the amount of the chiral agent ("LC756" manufactured by BASF SE) was changed to 9.8 parts. Another production was also performed by setting the coating thickness of the liquid crystal composition so that the thickness of the CLC layer became 7 μm. In this case, however, poor orientation frequently occurred and the layer became turbid. Thus, the example in which the thickness was set to 3 μm was adopted as the present Production Example. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the circularly polarized light reflected by the CLC layer was measured using the measurement method described above, it was found to be clockwise. The CLC layer showed a blue color when visually observed under natural light.

[Production Example **6.** Production of broadband counterclockwise circularly polarizing blue reflective CLC layer]

A multilayer member (CLC_BaL) including a support film and a CLC layer (thickness: 3 μm) having a circularly polarized light separation function was produced by the same manner as that of Production Example 2 except that the amount of the chiral agent (X3) was changed to 10.2 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. Furthermore, when the rotation direction of the

circularly polarized light reflected by the CLC layer was measured using the measurement method described above, it was found to be counterclockwise. The CLC layer showed a blue color when visually observed under natural light.

[Production Example 7. Production of broadband clockwise circularly polarizing infrared reflective CLC layer]

A multilayer member (CLC_IRaR) including a support film and a CLC layer (thickness: 3 μm) having a circularly polarized light separation function was produced by the same manner as that of Production Example 1 except that the amount of the chiral agent ("LC756" manufactured by BASF SE) was changed to 4 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.15. The CLC layer was clear and colorless when visually observed under natural light.

[Production Example 8. Production of mid-band counterclockwise circularly polarizing red reflective CLC layer]

A multilayer member (CLC_RbL) including a support film and a CLC layer (thickness: 3 μm) having a circularly polarized light separation function was produced by the same manner as that of Production Example 1 except that 100 parts of a photopolymerizable liquid crystal compound represented by the following formula (X4) was used instead of 100 parts of the liquid crystal compound represented by the formula (X1), and 6.8 parts of a compound represented by the formula (X3) was used as the chiral agent instead of "LC756" manufactured by BASF SE. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.12. Furthermore, when the rotation direction of the circularly polarized light reflected by the CLC layer was measured using the measurement method described above, it was found to be counterclockwise. The CLC layer showed a red color when visually observed under natural light.

[Chemical formula 7]

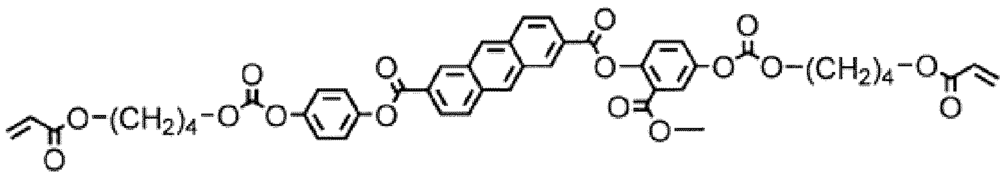

(X 4)

[Production Example 9. Production of mid-band clockwise circularly polarizing red reflective CLC layer]

A multilayer member (CLC_RbR) including a support film and a CLC layer (thickness: 3 μm) having a circularly polarized light separation function was produced by the same manner as that of Production Example 8 except that 6.5 parts of "LC756" manufactured by BASF SE was used instead of the compound represented by the formula (X3) as the chiral agent. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.12. Furthermore, when the rotation direction of the circularly polarized light reflected by the CLC layer was measured using the measurement method described above, it was found to be clockwise. The CLC layer showed a red color when visually observed under natural light.

[Production Example 10. Production of mid-band clockwise circularly polarizing green reflective CLC layer]

A multilayer member (CLC_GbR) including a support film and a CLC layer (thickness: 3 μm) having a circularly polarized light separation function was produced by the same manner as that of Production Example 8 except that the amount of the chiral agent was changed to 8.2 parts of "LC756" manufactured by BASF SE. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.12. Furthermore, when the rotation direction of the circularly polarized light reflected by the CLC layer was measured using the

measurement method described above, it was found to be clockwise. The CLC layer showed a green color when visually observed under natural light.

[Production Example 11. Production of mid-band counterclockwise circularly polarizing green reflective CLC layer]

A multilayer member (CLC_GbL) including a support film and a CLC layer (thickness: 3 μm) having a circularly polarized light separation function was produced by the same manner as that of Production Example 8 except that the amount of the chiral agent (X3) was changed to 8.5 parts. The reflectance of the CLC layer of this multilayer member was measured using the measurement method described above. As a result of measurement, the CLC layer had a reflectance of 50% at the selective reflection center wavelength $\lambda c$, and the half-width $\Delta\lambda$ of the reflection band and the above-mentioned $\lambda c$ were in a relationship of having a ratio of $\Delta\lambda/\lambda c = 0.12$. Furthermore, when the rotation direction of the circularly polarized light reflected by the CLC layer was measured using the measurement method described above, it was found to be counterclockwise. The CLC layer showed a green color when visually observed under natural light.

[Production Example 12. Production of mid-band clockwise circularly polarizing blue reflective CLC layer]

A multilayer member (CLC_BbR) including a support film and a CLC layer (thickness: 3 μm) having a circularly polarized light separation function was produced by the same manner as that of Production Example 8 except that the amount of the chiral agent ("LC756" manufactured by BASF SE) was changed to 10.2 parts. The reflectance of the CLC layer of this multilayer member was measured using the measurement method described above. As a result of measurement, the CLC layer had a reflectance of 50% at the selective reflection center wavelength $\lambda c$, and the half-width $\Delta\lambda$ of the reflection band and the above-mentioned $\lambda c$ were in a relationship of having a ratio of $\Delta\lambda/\lambda c = 0.12$. Furthermore, when the rotation direction of the circularly polarized light reflected by the CLC layer was measured using the measurement method described above, it was found to be clockwise. The CLC layer showed a blue color when visually observed under natural light.

[Production Example 13. Production of narrowband clockwise circularly polarizing red reflective CLC layer]

(P13-1. Liquid crystal composition)

A liquid crystal composition was prepared by mixing 100 parts of a photopolymerizable liquid crystal compound represented by the following formula (X5), 5.7 parts of a chiral agent ("LC756" manufactured by BASF SE), 5 parts of a photopolymerization initiator ("Irgacure 907" manufactured by Ciba Japan), 0.15 part of a surfactant ("S-420" manufactured by AGC Seimi Chemical Co., Ltd.), and 320 parts of cyclopentanone as a solvent.

(P13-2. Multilayer member including CLC layer)

A multilayer member (CLC_RcR) including a support film and a CLC layer (thickness: 5 μm) having a circularly polarized light separation function was produced by the same manner as that of Production Example 1 except that the liquid crystal composition obtained in (P11-1) was used as the liquid crystal composition instead of the liquid crystal composition prepared in (P1-1) of Production Example 1 and the coating thickness of the liquid crystal composition was changed. Another production was also performed by setting the thickness of the CLC layer to 3 μm while the coating thickness of the liquid crystal composition was not changed from that in Production Example 1. In this case, however, the reflectance was as low as 35%, and so sufficient optical characteristics were not achieved. Thus, the example in which the thickness of the CLC layer was set to 5 μm was adopted as the present Production Example. The reflectance of the CLC layer of this multilayer member was measured using the measurement method described above. As a result of measurement, the CLC layer had a reflectance of 50% at the selective reflection center wavelength $\lambda c$, and the half-width $\Delta\lambda$ of the reflection band and the above-mentioned $\lambda c$ were in a relationship of having a ratio of $\Delta\lambda/\lambda c = 0.09$. Furthermore, when the rotation direction of the circularly polarized light reflected by the CLC layer was measured using the measurement method described above, it was found to be clockwise. The CLC layer showed a red color when visually observed under natural light.

[Chemical formula 8]

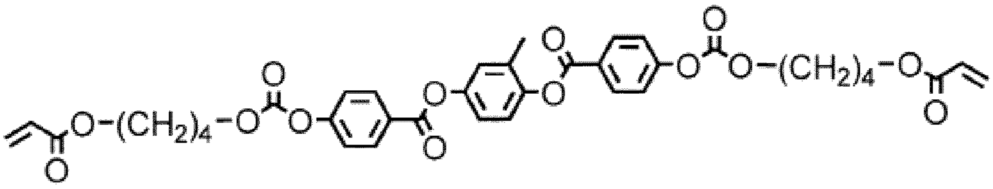

(X 5)

[Production Example 14. Production of narrowband counterclockwise circularly polarizing red reflective CLC layer]

A multilayer member (CLC_RcL) including a support film and a CLC layer (thickness: 3 μm) having a circularly polarized light separation function was produced by the same manner as that of Production Example 13 except that 5.8 parts of the compound represented by the formula (X3) was used as the chiral agent instead of "LC756" manufactured by BASF SE. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of **Δλ/λc** = 0.09. Furthermore, when the rotation direction of the circularly polarized light reflected by the CLC layer was measured using the measurement method described above, it was found to be counterclockwise. The CLC layer showed a red color when visually observed under natural light.

[Production Example 15. Production of narrowband clockwise circularly polarizing green reflective CLC layer]

A multilayer member (CLC_GcR) including a support film and a CLC layer (thickness: 5 μm) having a circularly polarized light separation function was obtained by the same manner as that of Production Example 13 except that the amount of the chiral agent ("LC756" manufactured by BASF SE) was changed to 6.9 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.09. Furthermore, when the rotation direction of the circularly polarized light reflected by the CLC layer was measured using the measurement method described above, it was found to be clockwise. The CLC layer showed a green color when visually observed under natural light.

[Production Example 16. Production of narrowband counterclockwise circularly polarizing green reflective CLC layer]

A multilayer member (CLC_GcL) including a support film and a CLC layer (thickness: 3 μm) having a circularly polarized light separation function was produced by the same manner as that of Production Example 13 except that the amount of the chiral agent (X3) was changed to 7.2 parts. The reflectance of the CLC layer of this multilayer member was measured using the measurement method described above. As a result of measurement, the CLC layer had a reflectance of 50% at the selective reflection center wavelength λc, and the half-width Δλ of the reflection band and the above-mentioned λc were in a relationship of having a ratio of Δλ/λc = 0.09. Furthermore, when the rotation direction of the circularly polarized light reflected by the CLC layer was measured using the measurement method described above, it was found to be counterclockwise. The CLC layer showed a green color when visually observed under natural light.

[Production Example 17. Production of narrowband clockwise circularly polarizing blue-green reflective CLC layer]

A multilayer member (CLC_XcR) including a support film and a CLC layer (thickness: 5 μm) having a circularly polarized light separation function was produced by the same manner as that of Production Example 13 except that the amount of the chiral agent ("LC756" manufactured by BASF SE) was changed to 7.5 parts. The reflectance of the CLC layer of this multilayer member was measured using the measurement method described above. As a result of measurement, the CLC layer had a reflectance of 50% at the selective reflection center wavelength **λc**, and the half-width Δλ of the reflection band and the above-mentioned λc were in a relationship of having a ratio of Δλ/λc = 0.09. Furthermore, when the rotation direction of the circularly polarized light reflected by the CLC layer was measured using the measurement method described above, it was found to be clockwise. The CLC layer showed a blue-green color when visually observed under natural light.

[Production Example 18. Production of narrowband clockwise circularly polarizing blue reflective CLC layer]

A multilayer member (CLC_BcR) including a support film and a CLC layer (thickness: 5 μm) having a circularly polarized light separation function was produced by the same manner as that of Production Example 13 except that the amount of the chiral agent ("LC756" manufactured by BASF SE) was changed to 8.1 parts. The reflectance of the CLC layer of this multilayer member was measured using the measurement method described above. As a result of measurement, the CLC layer had a reflectance of 50% at the selective reflection center wavelength $\lambda c$, and the half-width $\Delta\lambda$ of the reflection band and the above-mentioned $\lambda c$ were in a relationship of having a ratio of $\Delta\lambda/\lambda c = 0.09$. Furthermore, when the rotation direction of the circularly polarized light reflected by the CLC layer was measured using the measurement method described above, it was found to be clockwise. The CLC layer showed a blue color when visually observed under natural light.

[Production Example 19. Production of wideband clockwise circularly polarizing silver reflective CLC layer]

(P19-1. Liquid crystal composition)

A liquid crystal composition was prepared by the same manner as that of (P1-1) of Production Example 1 except that the amount of the chiral agent ("LC756" manufactured by BASF SE) was changed to 8.2 parts.

(P19-2. Multilayer member including CLC layer)

As a support film, a long-length polyethylene terephthalate film ("A4100" manufactured by Toyobo Co., Ltd.; thickness 100 μm) was prepared. This support film was attached to a feeding unit of a film conveyance machine, and the following operations were performed while conveying the support film in the long-length direction.

The surface of the support film was subjected to a rubbing treatment in the long-length direction parallel to the conveying direction. Subsequently, the liquid crystal composition obtained in (P19-1) was applied onto the surface of the support film, which had been subjected to the rubbing treatment, using a die coater, thereby forming a layer of the liquid crystal composition. This liquid crystal composition layer was subjected to an orientation treatment by heating at 120°C for 5 minutes, so that the liquid crystal composition was oriented so as to exhibit a cholesteric liquid crystal phase. After that, the liquid crystal composition layer was subjected to a broadband treatment. In this broadband treatment, weak irradiation with ultraviolet rays of 5 $mJ/cm^2$ to 30 $mJ/cm^2$ and a heating treatment at 100°C to 120°C were alternately repeated multiple times so that a wavelength range in which the circularly polarized light separation function can be exhibited was controlled so as to include the desired wavelength width. After that, the liquid crystal composition layer was irradiated with ultraviolet rays of 800 $mJ/cm^2$ to be cured. As a result, a multilayer member (CLC_SR) including the support film and a broadband silver reflective CLC layer (thickness: 5 μm) having the circularly polarized light separation function was obtained.

The reflectance of the CLC layer of this multilayer member (CLC_SR) was measured using the measurement method described above. As a result of measurement, the CLC layer exhibited generally uniform reflectance in the entire visible light region (450 nm to 650 nm). Thus, the half-width $\Delta\lambda$ of the reflection band and the selective reflection center wavelength $\lambda c$ were unable to be determined and the ratio $\Delta\lambda/\lambda c$ was unable to be calculated. Furthermore, when the rotation direction of the circularly polarized light reflected by the CLC layer was measured using the measurement method described above, it was found to be clockwise. The CLC layer showed a silver color when visually observed under natural light.

[Production Example 20. Production of broadband counterclockwise circularly polarizing silver reflective CLC layer]

A multilayer member (CLC_SL) including a support film and a CLC layer (thickness: 5 μm) having a circularly polarized light separation function was produced by the same manner as that of Production Example 19 except that 8.5 parts of the compound represented by the formula (X3) was used instead of "LC756" manufactured by BASF SE as the chiral agent. The reflectance of the CLC layer of this multilayer member was measured using the measurement method described above. As a result of measurement, the CLC layer exhibited generally uniform reflectance in the entire visible light region (450 nm to 650 nm). Thus, the half-width $\Delta\lambda$ of the reflection band and the selective reflection center wavelength $\lambda c$ were unable to be determined and the ratio $\Delta\lambda/\lambda c$ was unable to be calculated. Furthermore, when the rotation direction of the circularly polarized light reflected by the CLC layer was measured using the measurement method described above, it was found to be counterclockwise. The CLC layer showed a silver color when visually observed under natural light.

[Production Example 21. Production of CLC flake_RaR]

Flakes of CLC layer was obtained by peeling off the support film from the multilayer member (CLC_RaR) obtained in Production Example 1 and crushing the obtained CLC layer. The resulting flakes were classified by a sieve to obtain CLC flake_RaR having an average particle diameter of 25 μm.

[Production Examples 22 to 27 and 33 to 45. Production of CLC flakes

Various flakes were obtained as indicated in Table 8 by the same manner as that of Production Example 21 except that those indicated in Table 8 among various multilayer members obtained in Production Examples 1 to 20 were used.

[Production Examples 28 to 32. Production of CLC flakes]

Various flakes having an average particle diameter of 75 μm indicated in Table 8 were obtained by the same manner as that in Production Example 21 except that those indicated in Table 8 among various multilayer members obtained in Production Examples 1 to 20 were used and the sieve for classification were changed.

Table 8

| Prod. Ex. | Used multilayer material symbol | Flake symbol | Reflected light rotation direction | λc | Δλ/λc | Film thickness | Ave. particle diameter |
|---|---|---|---|---|---|---|---|
| 21 | CLC_RaR | CLC_RaR | R | 650nm | 0.15 | 3μm | 25μm |
| 22 | CLC_RaL | CLC_RaL | L | 650nm | 0.15 | 3μm | 25μm |
| 23 | CLC_GaR | CLC_GaR | R | 550nm | 0.15 | 3μm | 25μm |
| 24 | CLC_GaL | CLC_GaL | L | 550nm | 0.15 | 3μm | 25μm |
| 25 | CLC_BaR | CLC_BaR | R | 450nm | 0.15 | 3μm | 25μm |
| 26 | CLC_BaL | CLC_BaL | L | 450nm | 0.15 | 3μm | 25μm |
| 27 | CLC_IRa R | CLC_IRaR | R | 750nm | 0.15 | 3μm | 25μm |
| 28 | CLC_RaR | CLC_RaR2 | R | 650nm | 0.15 | 3μm | 75μm |
| 29 | CLC_RaL | CLC_RaL2 | L | 650nm | 0.15 | 3μm | 75μm |
| 30 | CLC_GaR | CLC_GaR2 | R | 550nm | 0.15 | 3μm | 75μm |
| 31 | CLC_GaL | CLC_GaL2 | L | 550nm | 0.15 | 3μm | 75μm |
| 32 | CLC_BaR | CLC_BaR2 | R | 450nm | 0.15 | 3μm | 75μm |
| 33 | CLC_RbR | CLC_RbR | R | 650nm | 0.12 | 3μm | 25μm |
| 34 | CLC_RbL | CLC_RbL | L | 650nm | 0.12 | 3μm | 25μm |
| 35 | CLC_GbR | CLC_GbR | R | 550nm | 0.12 | 3μm | 25μm |
| 36 | CLC_GbL | CLC_GbL | L | 550nm | 0.12 | 3μm | 25μm |
| 37 | CLC_BbR | CLC_BbR | R | 450nm | 0.12 | 3μm | 25μm |
| 38 | CLC_RcR | CLC_RcR | R | 650nm | 0.09 | 5μm | 25μm |
| 39 | CLC_RcL | CLC_RcL | L | 650nm | 0.09 | 5μm | 25μm |
| 40 | CLC_GcR | CLC_GcR | R | 550nm | 0.09 | 5μm | 25μm |
| 41 | CLC_GcL | CLC_GcL | L | 550nm | 0.09 | 5μm | 25μm |
| 42 | CLC_XcR | CLC_XcR | R | 500nm | 0.09 | 5μm | 25μm |
| 43 | CLC_BcR | CLC_BcR | R | 450nm | 0.09 | 5μm | 25μm |
| 44 | CLC_SR | CLC_SR | R | Silver | Broadband | 5μm | 25μm |
| 45 | CLC_SL | CLC_SL | L | Silver | Broadband | 5μm | 25μm |

[Production Example 46. λ/4 stretched resin film]

A resin film formed from a thermoplastic norbornene resin ("ZEONOR Film" manufactured by ZEON Corporation; film produced by extrusion molding; unstretched product) was prepared. This resin film was stretched in one direction at a stretching temperature of 130°C to obtain a phase difference film (R1) having an in-plane retardation capable of functioning as a 1/4 wave plate. The thickness of this phase difference film (R1) was 48 μm, and the in-plane retardation was 144 nm.

[Example 1]

(1-1. Flake mixture 1)

CLC flake_RaR, CLC flake_GaR, and CLC flake_BaL obtained in the above-mentioned Production Examples were mixed in the weight ratio shown in Table 9 to obtain a CLC flake mixture 1.

(1-2. Production of light reflective layer (I))

A CLC flake mixed ink was obtained by mixing 10 parts of the CLC flake mixture obtained in (1-1), 85 parts of a screen ink ("No. 2500 medium" manufactured by Jujo Chemical Co., Ltd.), and 5 parts of a diluent specific for the screen ink (TETRON standard solvent). The obtained ink was applied onto a light absorption layer (manufactured by Toyobo Co., Ltd., black PET film, thickness 100 μm) using a comma coater and dried to form a light reflective layer (1) as the light reflective layer (I) with a thickness of 40 μm.

(1-3. Reflection spectrum measurement of light reflective layer (I))

The reflection spectrum of the light reflective layer (1) obtained in (1-2) was measured using an integrating sphere with the ultraviolet-visible spectrophotometer ("UV-Vis 770" manufactured by JASCO Corp.). Based on the obtained results, B(430-490)Ave, G(500-600)Ave, and R(600-660)Ave, which are average values of integrated reflectance in a blue region (B), green region (G), and red region (R) of the visible light region, respectively, were determined, and their ratios R/G and B/G were further calculated. The results are shown in Table 9.

(1-4. Visual observation of light reflective layer (I))

The light reflective layer (1) obtained in (1-2) was visually observed to evaluate a color tone, a degree of glare, and presence or absence of color change when the observation angle was changed from the front to an inclined angle. The evaluation results are shown in Table 9.

(1-5. Color tone measurement of light reflective layer)

The a* value and b* value, which are color tone indicators, of the light reflective layer (1) obtained in (1-2) were measured under a D65 light source based on the method of JIS Z 8781-4. The results are shown in Table 9.

(1-6. Production and evaluation of light reflective layer (II))

A light reflective layer (1-2) as the light reflective layer (II) was obtained and evaluated by the same manner as those in (1-1) to (1-5) except that the type of CLC flakes was changed according to Table 9. The results are shown in Table 9.

(1-7. Production of identification medium (1))

An identification medium (1) whose schematic structure is shown in FIG. 1 and FIG. 2 was produced.

First, the light reflective layer (1) and the light reflective layer (1-2) were cut into a predetermined shape and attached to another light absorption layer 110 via an adhesive, and the original light absorption layer was peeled off. As a result, on one light absorption layer 110, the light reflective layer (1) 121 was disposed via an adhesive layer 131, and the light reflective layer (1-2) 122 was disposed on the light absorption layer 110 via an adhesive layer 132. The light reflective layer (1) 121 and the light reflective layer (1-2) 122 were provided in a so-called knock-out printing manner, that is, in a manner in which they are in contact with each other on the side surface. Furthermore, the λ/4 stretched resin film obtained in Production Example 46 was attached as a phase difference layer 140 via an adhesive layer 133 so as to cover the entire

area of the upper surface of the light reflective layer (1) 121 and the light reflective layer (1-2) 122. Furthermore, a 0.4-mm thick glass plate 150 was attached as a covering layer via an adhesive layer 134 so as to cover the upper surface of the phase difference layer 140. In this manner, the identification medium (1) 100 was obtained. As shown in FIGs. 1 and 2, the display surface 160 of the identification medium (1) 100 included a region 160A corresponding to the light reflective layer (1) 121 and a region 160B corresponding to the light reflective layer (1-2).

(1-8. Observation of identification medium (1))

An observer observed the identification medium (1) from the vertical direction while the identification medium (1) was kept in a horizontally placed state and the azimuth angle of the identification medium (1) was rotated by 360°. The observation was performed with the naked eye and via linear polarizers in polarized sunglasses. The observation was performed in a bright room using fluorescent light as a light source.

In the observation with the naked eye, an achromatic silver appearance was visually recognized within the display surface 160 due to reflection from the light reflective layer (1) 121 and the light reflective layer (1-2) 122. The light reflective layer (1) 121 and the light reflective layer (1-2) 122 were visually recognized as members having colors of the same type, and the star shape of the region 160A was almost invisible.

In the observation via the polarized sunglasses, the light reflective layer (1) 121 and the light reflective layer (1-2) 122 were visually recognized as members not having colors of the same type, and the star shape of the region 160A was visually recognized. Each of the color tone of the region 160A and the color tone of the region 160B changed according to the rotation angle.

(1-9. Contrast measurement and color change measurement of identification medium (1))

The identification medium (1) was kept in a horizontally placed state and the azimuth angle of the identification medium (1) was rotated by 360°. Under the D65 light source, the display surfaces 160A and 160B were observed from the vertical direction via a linear polarizer of polarized glasses that were identical with those used in (1-8) based on the method of JIS Z 8781-4 to measure an L* value, an a* value, and a b* value (L*(160A), a*(160A), b*(160A), L*(160B), a*(160B), and b*(160B)) of each surface using a spectrophotometer CM-700d manufactured by Konica Minolta, Inc. under SCE photometry conditions. These values were changed as the azimuth angle of the identification medium was changed.

Differences |L*(160A) - L*(160B)| between L*(160A) and L*(160B) at various azimuth angles $\theta$ were measured, and a value of |L*(160A) - L*(160B)| at $\theta$ at which the value became maximum was defined as $\Delta$L*.

Also, values of √(|a*(160A) - a*(160B)|^2 + |b*(160A) - b*(160B)|^2) at various azimuth angles $\theta$ were measured, and a value of √(|a* (160A) - a*(160B)|^2 + |b*(160A) - b*(160B)|^2) at $\theta$ at which the value became maximum was defined as $\Delta$a*b*.

The results are shown in Table 10.

(1-10. Reflectance)

The reflectance when non-polarized light (wavelength 450 nm to 650 nm) was incident on the region 160A and the region 160B of the display surface 160 of the identification medium (1) was measured using an ultraviolet-visible spectrophotometer ("UV-Vis 770" manufactured by JASCO Corp.) equipped with an integrating sphere to determine the average reflectance at wavelengths of 450 nm to 650 nm. Since there was almost no difference in the average reflectance between the region 160A and the region 160B, the measured values in the region 160A are shown in Table 10 as representative values.

[Examples 2 to 11, and Comparative Example 1]

Light reflective layers 2 to 12 and 2-2 to 12 to 2 with a thickness of 40 $\mu$m were obtained by the same manner as that of Example 1 except that the type and proportion of the CLC flakes mixed in (1-1) and (1-6) were changed as shown in Table 9, and then identification media (2) to (12) were obtained using these light reflective layers in combinations as shown in Table 10 and evaluated.

The results are shown in Table 9 and Table 10.

In all of Examples and Comparative Example, in the observation of the identification media (corresponding to (1-8) of Example 1) in the observation with the naked eye, the light reflective layer (1) 121 and the light reflective layer (1-2) 122 were visually recognized as members having colors of the same type within the display surface 160, and the star shape of the region 160A was almost invisible. There was no visible difference in brightness between the region 160A and the region 160B in the display surface 160, and that was unchanged by the rotation. The appearance of the display surface 160, when observed with the naked eye, was as shown in Table 10.

When the identification media were observed via the polarized sunglasses, the star shape of the region 160A was visually recognized. The difference between the brightness of the region 160A and the brightness of the region 160B was changed by the rotation. In addition, the color tone of the region 160A in Examples changed according to the rotation angle with aspects shown in Table 10, and the color tone in Comparative Example did not change.

[Comparative Example 2]

Light reflective layers 13 and 13-2 with a thickness of 40 μm were obtained by the same manners as those of Example 1 except that the types of the CLC flakes mixed in (1-1) and (1-6) were changed to the CLC flake_S alone, and an identification medium (13) was obtained by combining the light reflective layers 13 and 13-2 and evaluated.

In the observation of the identification medium (corresponding to (1-8) of Example 1), the following results were obtained. That is, in the observation with the naked eye, an achromatic silver appearance without having a pearl-like tone was visually recognized within the display surface 160 due to reflection from the light reflective layers 121 and 122. The light reflective layer (13) 121 and the light reflective layer (13-2) 122 were visually recognized as members having colors of the same type, and the star shape of the region 160A was almost invisible.

There was no visible difference in brightness between the region 160A and the region 160B in the display surface 160, and that was unchanged by the rotation. In the observation via the polarized sunglasses, the star shape of the region 160A was visually recognized. The difference between the brightness of the region 160A and the brightness of the region 160B was changed by the rotation. The color tone of the region 160A did not change by the rotation.

Other evaluation results are shown in Table 9 and Table 10.

Table 9

| Light reflective layer No. | Flake type | | | | | Propotion (wt. ratio) | Evaluation | | | | | | |
|---|---|---|---|---|---|---|---|---|---|---|---|---|---|
| | B | G | R | X | IR | B:G:R:X:I R | R/G | B/G | a* | b* | Color tone | Glare | Inc line co lor change |
| (1) | aL | aR | aR | - | - | 1:1:1:0:0 | 0.97 | 0.99 | -0.33 | 0.61 | Silver | Low | Yes |
| (1-2) | aR | aR | aL | - | - | 1:1:1:0:0 | 0.97 | 0.99 | -0.33 | 0.61 | Silver | Low | Yes |
| (2) | aR2 | aR2 | aL2 | - | - | 1:1:1:0:0 | 1.01 | 0.99 | 0.54 | 1.52 | Silver | High | Yes |
| (2-2) | aR2 | aR2 | aR2 | - | - | 1:1:1:0:0 | 1.01 | 0.99 | 0.54 | 1.52 | Silver | High | Yes |
| (3) | aR | bL | aR | - | - | 1:1:1:0:0 | 0.99 | 1.00 | -0.06 | 1.04 | Silver | Low | Yes |
| (3-2) | aR | bR | aR | - | - | 1:1:1:0:0 | 0.99 | 1.00 | -0.06 | 1.04 | Silver | Low | Yes |
| (4) | aR2 | aR2 | aL2 | - | aR | 1:1:1:0:1 | 1.01 | 0.99 | 0.54 | 1.52 | Silver | High | No |
| (4-2) | aR2 | aR2 | aR2 | - | aR | 1:1:1:0:1 | 1.01 | 0.99 | 0.54 | 1.52 | Silver | High | No |
| (5) | aR2 | aL2 | aR | - | - | 1:1:1:0:0 | 0.94 | 0.97 | -1.36 | 0.66 | Silver | High | Yes |
| (5-2) | aR2 | aR2 | aR | - | - | 1:1:1:0:0 | 0.94 | 0.97 | -1.36 | 0.66 | Silver | High | Yes |
| (6) | bR | bR | bL | - | - | 1.2:1:1:0 | 0.97 | 0.92 | -1.27 | 3.41 | Silver | Low | Yes |
| (6-2) | bR | bR | bR | - | - | 1.2:1:1:0 | 0.97 | 0.92 | -1.27 | 3.41 | Silver | Low | Yes |
| (7) | aR | bL | bR | - | - | 1:1:1:0:0 | 0.95 | 1.16 | 0.33 | -6.20 | Light blue | Low | Yes |
| (7-2) | aR | bR | bR | - | - | 1:1:1:0:0 | 0.95 | 1.16 | 0.33 | -6.20 | Light blue | Low | Yes |
| (8) | aR2 | aR | aL2 | - | - | 1:1:1:0:0 | 1.06 | 1.00 | 3.07 | 0.14 | Light red | High | Yes |

(continued)

| Light reflec tive layer No. | Flake type | | | | | Propotion (wt. ratio) | Evaluation | | | | | | |
|---|---|---|---|---|---|---|---|---|---|---|---|---|---|
| | B | G | R | X | IR | B:G:R:X:I R | R/G | B/G | a* | b* | Color tone | Gla re | Inc line co lor chan ge |
| (8-2) | aR2 | aR | aR2 | - | - | 1:1:1:0:0 | 1.06 | 1.00 | 3.07 | 0.14 | Light red | High | Yes |
| (9) | cR | cL | cR | - | - | 1:1:1:0:0 | 1.06 | 0.94 | 2.91 | 0.25 | Light red | Low | Yes |
| (9-2) | cR | cR | cR | - | - | 1:1:1:0:0 | 1.06 | 0.94 | 2.91 | 0.25 | Light red | Low | Yes |
| (10) | cR | cR | cL | cR | - | 1.1:1:1.5:0 .6:0 | 1.01 | 1.01 | -2.39 | 1.23 | Silver | Low | Yes |
| (10-2) | cR | cR | cR | cR | - | 1.1:1:1.5:0 .6:0 | 1.01 | 1.01 | -2.39 | 1.23 | Silver | Low | Yes |
| (11) | aR | | aL | - | - | 1:0:1:0:0 | 1.52 | 1.65 | 19.27 | -14.67 | Magen ta | Low | Yes |
| (11-2) | aR | | aR | - | - | 1:0:1:0:0 | 1.52 | 1.65 | 19.27 | -14.67 | Magen ta | Low | Yes |
| (12) | aR | aR | aR | - | - | 1:1:1:0:0 | 0.97 | 0.99 | -0.33 | 0.61 | Silver | Low | Yes |
| (12-2) | aL | aL | aL | - | - | 1:1:1:0:0 | 0.97 | 0.99 | -0.33 | 0.61 | Silver | Low | Yes |
| (13) | SR | | | | | - | 0.98 | 0.98 | -1.17 | 2.25 | Silver | Low | No |
| (13-2) | SL | | | | | - | 0.98 | 0.98 | -1.17 | 2.25 | Silver | Low | No |

In Table 9, the types of flakes used are indicated by the suffix of each flake symbol. For example, "aR" in the R column indicates that CLC flake_RaR was used.

Table 10

| | Identifi cation medium No. | Light reflec tive layer (I) | Light reflec tive layer (II) | Light reflective layer (I) visual observation | Light refle ctive layer (I) polari zed light obser vation color tone change | Color change Δa*b* | Bright ness change ΔL* | 450-650 ref lec tance (%) |
|---|---|---|---|---|---|---|---|---|
| Ex. 1 | (1) | (1) | (1-2) | Silver pearl tone | Yellow <->blue | 25 | 15 | 27 |
| Ex. 2 | (2) | (2) | (2-2) | Silver pearl tone | Cyan <->red | 20 | 11 | 29 |
| Ex. 3 | (3) | (3) | (3-2) | Silver pearl tone | Magenta <->green | 26 | 13 | 26 |
| Ex. 4 | (4) | (4) | (4-2) | Silver pearl tone | Cyan <->red | 22 | 10 | 29 |
| Ex. 5 | (5) | (5) | (5-2) | Slight green silver pearl tone | Magenta <->green | 20 | 13 | 29 |

(continued)

| | Identifi cation medium No. | Light reflec tive layer (I) | Light reflec tive layer (II) | Light reflective layer (I) visual observation | Light refle ctive layer (I) polari zed light obser vation color tone change | Color change Δa*b* | Bright ness change ΔL* | 450-650 ref lec tance (%) |
|---|---|---|---|---|---|---|---|---|
| Ex. 6 | (6) | (6) | (6-2) | Slight yellow silve r pearl tone | Cyan <->red | 19 | 12 | 26 |
| Ex. 7 | (7) | (7) | (7-2) | Light blue | Cyan <->red | 8 | 10 | 26 |
| Ex. 8 | (8) | (8) | (8-2) | Light red | Yellow <->blue | 7 | 10 | 29 |
| Ex. 9 | (9) | (9) | (9-2) | Light red | Magenta <->green | 10 | 5 | 19 |
| Ex. 10 | (10) | (10) | (10-2) | Silver pearl tone | Cyan <->red | 17 | 6 | 19 |
| Ex. 11 | (11) | (11) | (11-2) | Magenta | **Blue** <->red | 8 | 6 | 21 |
| Comp. Ex. 1 | (12) | (12) | (12-2) | Silver pearl tone | Black <->white | 2 | 19 | 27 |
| Comp. Ex. 2 | (13) | (13) | (13-2) | Silver | Black <->white | 1 | 21 | 27 |

According to the results shown in Table 10, it was found that, in the identification medium of the present invention, the appearance of the light reflective layer showed various appearances of a silver color with a pearl-like tone and the like, and beautiful design qualities that were unexpected from each of the flakes were exhibited. In addition, the latent image constituted by the multiple light reflective layers that was visually unrecognizable with the naked eye was visually recognizable clearly due to a large brightness contrast difference (L*) and a large color tone difference (Δa*b*). Such latent image visibility caused by the contrast difference and the color tone change has usability of the same level as that when using the silver CLC layer known in the prior art obtained through the broadband treatment or different usability therefrom in terms of quality. Accordingly, it can be said that the identification medium of the present invention can exhibit the useful latent image visibility without undergoing complicated processing for band broadening.

Reference Sign List

100: identification medium
110: light absorption layer
121: light reflective layer (I)
122: light reflective layer (II)
131: adhesive layer
132: adhesive layer
133: adhesive layer
134: adhesive layer
140: phase different layer
150: covering layer
160: display surface
160A: region
160B: region

## Claims

**1.** An identification medium comprising a light reflective layer (I) and a light reflective layer (II) as light reflective layers, wherein:

the light reflective layers are layers that reflect incident light as circularly polarized light;
the light reflective layer (I) and the light reflective layer (II) are disposed side by side on a same plane;
the light reflective layer (I) and the light reflective layer (II) are in contact with each other or are adjacent to each other with a separation distance of 200 μm or less;
the light reflective layer (I) and the light reflective layer (II) are layers that exhibit colors of a same type;
the light reflective layer (I) contains a flake (I-1) and a flake (I-2) as multiple types of flakes of a material having cholesteric regularity;
the flake (I-1) and the flake (I-2) are different from each other in color;
the flake (I-1) has a selective reflection center wavelength λc(I-1);
the flake (I-2) has a selective reflection center wavelength λc(I-2);
the light reflective layer (II) contains a flake (II-1) and a flake (II-2) as multiple types of flakes of a material having cholesteric regularity;
the flake (II-1) and the flake (II-2) are different from each other in color;
the flake (II-1) has a selective reflection center wavelength λc(II-1);
the flake (II-2) has a selective reflection center wavelength λc(II-2);
the λc(I-1), the λc(I-2), the λc(II-1), and the λc(II-2) satisfy the following requirement (a-1) or satisfy the following requirement (a-2),

$$\lambda c(I-1) < \lambda c(I-2) \text{ and } \lambda c(II-1) < \lambda c(II-2)$$

Requirement (a-1),

$$\lambda c(I-1) > \lambda c(I-2) \text{ and } \lambda c(II-1) > \lambda c(II-2)$$

Requirement (a-2);

a rotation direction of reflected light from the flake (I-1) and a rotation direction of reflected light from the flake (I-2) are different from each other; and
a rotation direction of reflected light from the flake (I-1) and a rotation direction of reflected light from the flake (II-1) are different from each other.

**2.** The identification medium according to claim 1, wherein:

the light reflective layer (I) further contains a flake (I-3) as the multiple types of flakes;
the light reflective layer (II) further contains a flake (II-3) as the multiple types of flakes;
the flake (I-1), the flake (I-2), and the flake (I-3) are different from one another in color; and
the flake (II-1), the flake (II-2), and the flake (II-3) are different from one another in color.

**3.** The identification medium according to claim 1, wherein:

both the light reflective layers (I) and (II) satisfy the following formulae (b-1) and (b-2),

$$0.90 \leq B(430\text{-}490)Ave / G(500\text{-}600)Ave \leq 1.05 \text{ formula (b-1)},$$

$$0.90 \leq R(600\text{-}660)Ave / G(500\text{-}600)Ave \leq 1.05 \text{ formula (b-2)},$$

in the formulae, B(430-490)Ave is an average value of an integrated reflectance of the light reflective layer (I) or (II) in wavelengths of 430 nm to 490 nm,
G(500-600)Ave is an average value of an integrated reflectance of the light reflective layer (I) or (II) in wavelengths of 500 nm to 600 nm, and
R(600-660)Ave is an average value of an integrated reflectance of the light reflective layer (I) or (II) in wavelengths of 600 nm to 660 nm.

4. The identification medium according to claim 1, wherein the light reflective layers (I) and (II) exhibit a color tone from pale color to silver.

5. The identification medium according to claim 1, wherein:

any of the multiple types of flakes satisfies the formula **(c),**

$$0.10 \leq \Delta\lambda/\lambda c \leq 0.25 \quad \text{formula (c)}$$

in the formula, $\Delta\lambda$ is a half-width of a reflection band of the flake, and $\lambda c$ is a selective reflection center wavelength of the flake.

6. The identification medium according to claim 5, wherein all the multiple types of flakes satisfy the formula (c).

7. The identification medium according to claim 1, comprising a phase difference layer provided in a manner of overlapping with both the light reflective layer (I) and the light reflective layer (II).

8. The identification medium according to claim 7, wherein the phase difference layer is a $\lambda/4$ wave plate.

9. The identification medium according to claim 7, wherein the phase difference layer is provided at a position closer to a viewing side than the light reflective layer.

10. The identification medium according to claim 1, wherein all thicknesses of the multiple types of flakes are 3 μm or more and 7 μm or less.

11. The identification medium according to claim 1, wherein an average particle diameter of each of the multiple types of flakes is 100 μm or less.

12. The identification medium according to claim 1, wherein the light reflective layer (I), the light reflective layer (II), or both further contain a flake having a reflection band including a region exceeding a wavelength of 660 nm as the multiple types of flakes.

13. The identification medium according to claim 1, wherein an average value of an integrated reflectance of each of the light reflective layers (I) and (II) at 430 to 660 nm is 20% or higher.

14. The identification medium according to claim 1, further comprising a light absorption layer that is provided at a position on an opposite side to a viewing side of the light reflective layer.

15. The identification medium according to claim 1, comprising a covering layer that is provided at a position closer to a viewing side than the phase difference layer.

16. The identification medium according to claim 1, further comprising an attachment member for attaching the identification medium to an article.

17. An article comprising the identification medium according to any one of claims 1 to 16.

FIG.1

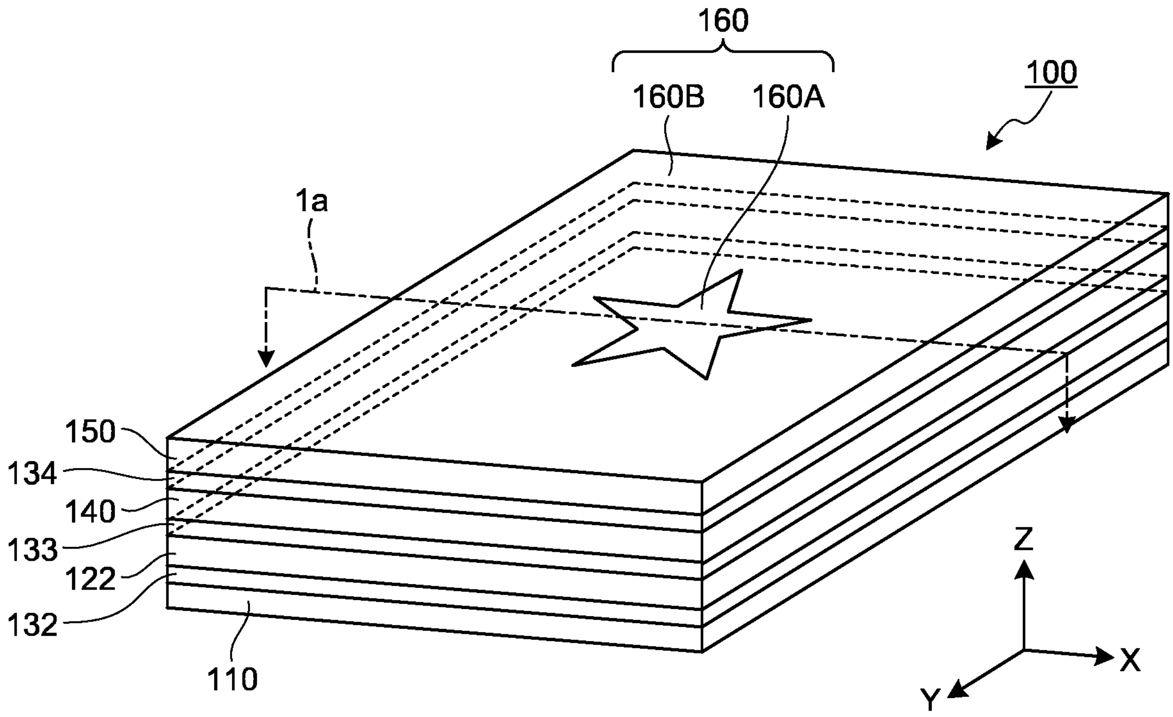
160
160B
160A
100
1a
150
134
140
133
122
132
110
Z
X
Y

FIG.2

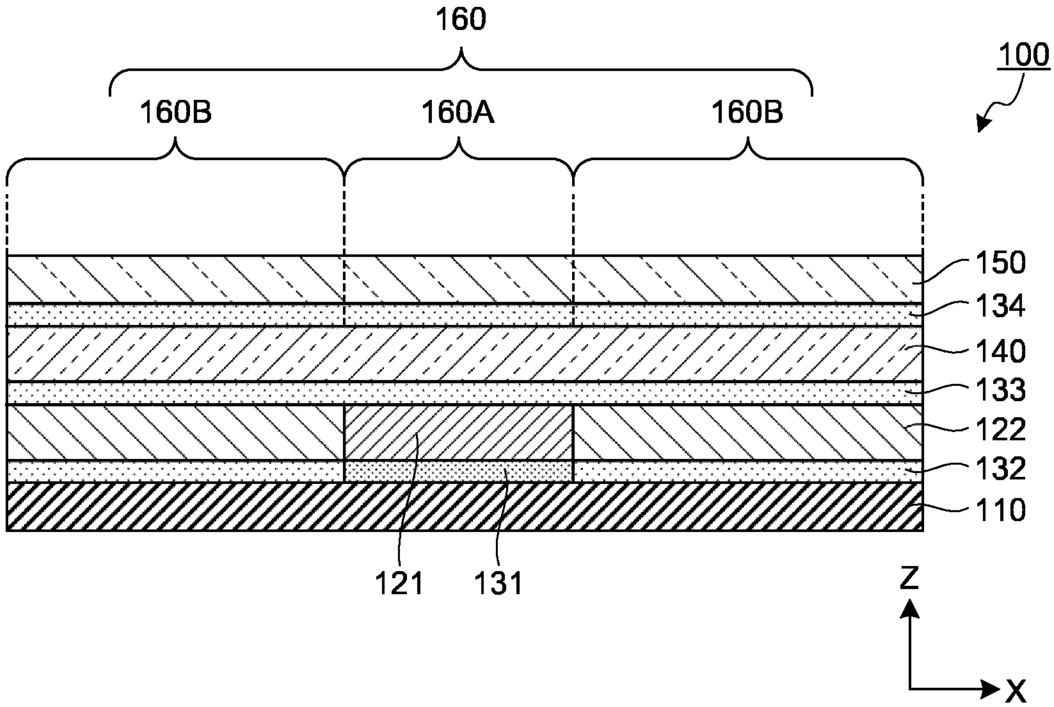
160
160B
160A
160B
100
150
134
140
133
122
132
110
121
131
Z
X

**INTERNATIONAL SEARCH REPORT**

International application No.
**PCT/JP2023/010786**

**A. CLASSIFICATION OF SUBJECT MATTER**

***G02B 5/30***(2006.01)i; ***B32B 7/023***(2019.01)i; ***B42D 25/22***(2014.01)i; ***B42D 25/364***(2014.01)i
FI: G02B5/30; B42D25/364; B42D25/22; B32B7/023

According to International Patent Classification (IPC) or to both national classification and IPC

**B. FIELDS SEARCHED**

Minimum documentation searched (classification system followed by classification symbols)

G02B5/30; B32B7/023; B42D25/22; B42D25/364

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-170649 A (TOPPAN PRINTING CO LTD) 17 June 2003 (2003-06-17) entire text | 1-17 |
| A | WO 2021/065484 A1 (ZEON CORPORATION) 08 April 2021 (2021-04-08) entire text | 1-17 |
| A | JP 2018-072388 A (TOPPAN PRINTING CO LTD) 10 May 2018 (2018-05-10) entire text | 1-17 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/010786**

| Patent document cited in search report | Publication date (day/month/year) | Patent family member(s) | Publication date (day/month/year) |
|---|---|---|---|
| JP 2003-170649 A | 17 June 2003 | (Family: none) | |
| WO 2021/065484 A1 | 08 April 2021 | US 2022/0357585 A1 | |
| | | EP 4040201 A1 | |
| | | CN 114402239 A | |
| JP 2018-072388 A | 10 May 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021153761 A
- EP 4099067 A
- JP 2005055556 A
- WO 2020121791 A
- JP 2019188740 A
- WO 2019116995 A
- JP 015 A